# FASCICULE DE BREVET EUROPEEN

(11) **EP 2 231 899 B1**
(45) Date de publication et mention de la délivrance du brevet: **01.03.2017**
(21) Numéro de dépôt: 08872058.6
(22) Date de dépôt: 28.11.2008
(51) Int. Cl.: C23G 1/02, C23G 3/02

(54) **INSTALLATION ET PROCEDE POUR LE DECAPAGE EN CONTINU DE BANDES D'ACIER**
VORRICHTUNG UND VERFAHREN ZUM KONTINUIERLICHEN BEIZEN VON STAHLBÄNDERN
APPARATUS AND METHOD FOR THE CONTINUOUS PICKLING OF STEEL STRIP

(30) Priorité: 21.12.2007 FR 0760222
(43) Date de publication de la demande: 29.09.2010
(73) Titulaire: Primetals Technologies France SAS, 42600 Savigneux (FR)
(72) Inventeur: CROWTHER, Sandra, F-69003 Lyon (FR); BARBIERI, Philippe, F-69003 Lyon (FR); LEROYER, Jacques, F-38200 Vienne (FR); CLAVEL, Jean-François, F-42800 Genilac (FR)
(74) Mandataire: Metals@Linz
(86) Numéro de dépôt international: PCT/FR2008/001655
(87) Numéro de publication internationale: WO 2009/098401

(56) Documents cités:
- EP-A- 1 106 713
- JP-A- 2000 297 390
- US-A- 6 096 137
- US-A1- 2004 149 323

## Description

L'invention concerne de manière générale le décapage de bandes d'acier en défilement dans une installation de décapage en continu, et plus particulièrement un procédé de décapage comprenant un contrôle centralisé de l'ensemble des opérations de décapage et l'installation pour sa mise en oeuvre.

Dans leurs processus d'élaboration, les bandes d'acier subissent une opération de laminage à chaud à des températures pouvant atteindre en fin de laminage près de 1200°C, puis une opération de laminage à froid. A l'issue du laminage à chaud, les bandes d'acier sont refroidies par pulvérisation d'eau sur les faces des bandes laminées, et sont enroulées à une température pouvant en bobines atteindre 800°C,.

Lors du laminage à chaud, il se forme par réaction d'oxydation avec l'eau pulvérisée une couche d'oxydes de fer nommée « calamine » de sorte qu'à l'issue du laminage à chaud, les bandes d'acier sont alors recouvertes d'une couche relativement épaisse et dure de calamine. L'oxydation continue pendant toute la phase de refroidissement des bobines à l'air. Les différentes températures et sources d'oxydation sont à l'origine de la présence de trois oxydes de fer dans la calamine. Cette calamine doit impérativement être enlevée avant le laminage final à froid, car sinon elle s'incrusterait dans le métal et altérerait considérablement son état de surface et son aptitude à l'emboutissage. D'autre part, la calamine étant extrêmement dure, sa présence sur les bandes d'acier risquerait d'entraîner une usure très rapide des cylindres de laminage à froid.

On utilise classiquement pour le décapage de bandes laminées à chaud des dispositifs comprenant des lignes spécialisées mettant en oeuvre un décapage chimique des bandes en défilement continu dans des bacs contenant des solutions de décapage acides.

Dans les dispositifs les plus anciens, les solutions de décapages sont des solutions d'acide sulfurique. Toutefois, on utilise actuellement des solutions de décapage à base d'acide chlorhydrique pour des raisons environnementales et de productivité

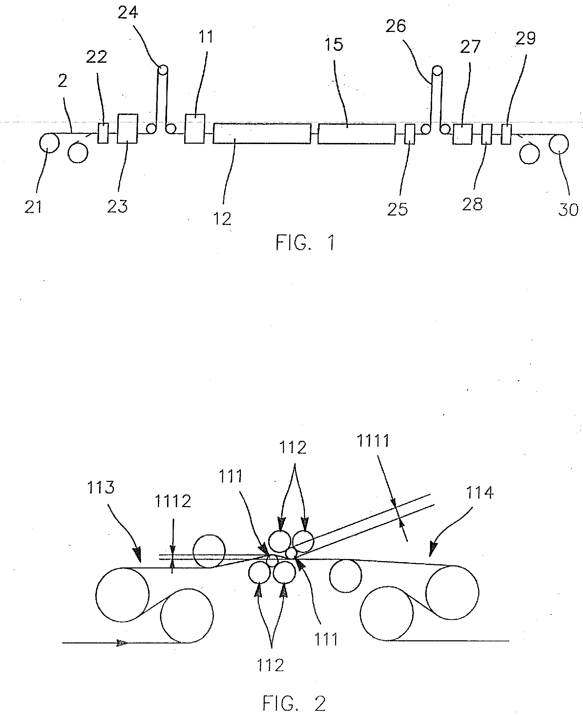

Un exemple d'installation classique de ligne continue de décapage 1 est représenté sur la figure 1. Il s'agit, d'une installation de décapage 1, qui comprend :
- un dispositif de fragmentation 11 des oxydes qui ont été formés à la surface de la bande d'acier 2 lors du laminage à chaud de cette bande 2, pour accélérer le processus de décapage ultérieur,
- un dispositif de décapage 12 proprement dit comportant une pluralité de bacs de décapage (non représentés sur la figure 1) pour l'attaque acide de ces oxydes, et
- une unité de rinçage 15 pour l'élimination de l'acide (notamment l'acide chlorhydrique) et des chlorures de fer présents à la surface de la bande 2,
le dispositif de fragmentation 11, le dispositif de décapage 12 et l'unité de rinçage étant disposés en série de manière que la bande 2 à décaper les traverse successivement lorsqu'elle passe en défilement continu dans l'installation de décapage 1.

L'installation 1 représentée sur la figure 1 comporte en outre :
- un ensemble 21 de dérouleurs de bande 21 fonctionnant alternativement, une soudeuse 23 et un premier dispositif d'accumulation 4, qui sont disposés en série en amont du dispositif de fragmentation 11, et
- un sécheur 25, un deuxième dispositif d'accumulation 26, une cisaille de rives 27, une huileuse 28, une cisaille 29 et un ensemble d'enrouleurs 30, qui sont également disposés en série mais en aval du dispositif 12 de décapage.

En fonctionnement, la bande 2 à décaper est déroulée par les dérouleurs 21 de bande et passe à travers la cisaille 22 qui coupe la tête de la bande 2. Celle-ci 2, passant à travers la soudeuse 23, est alors soudée à la queue de la bande précédemment coupée par la cisaille 22. Le dispositif d'accumulation 24 permet alors d'accumuler la bande 2, puis de la restituer vers l'aval, c'est-à-dire immédiatement en amont du dispositif de fragmentation 11, lorsque l'on effectue la soudure entre la queue de la bande précédente et la bande 2 à décaper. La bande 2 passe ensuite au travers du dispositif de fragmentation 11 des oxydes, communément appelé dispositif « brise oxydes ». Ce dispositif de fragmentation 11 permet notamment de fragmenter mécaniquement la calamine formée sur la bande 2 lors de la phase de laminage à chaud, ce qui facilite et accélère le décapage acide de la bande 2 qui succède immédiatement à cette fragmentation mécanique. Puis, après avoir traversé le dispositif de fragmentation 11, la bande 2 à décaper défile en continu dans les bacs de décapage du dispositif de décapage 12, qui sont chacun remplis d'une solution de décapage sous agitation. Le décapage acide de la bande 2 y est alors réalisé au trempé, et l'on obtient une bande 2 qu'il faut décaper.

Puis, après avoir défilé dans les bacs du dispositif de décapage 12, la bande 2 est alors rincée dans l'unité de rinçage 15, puis séchée dans le sécheur 25. Le deuxième dispositif d'accumulation 26 permet le défilement en continu de la bande 2 dans l'installation de décapage 1 pendant les opérations des coupe et de chargement d'enrouleurs 30.

La cisaille de rives 27 sert à éliminer les rives de la bande afin de permettre de garantir l'absence de défauts dits « de rives », comme des fissure, et aussi de garantir la constance de la largeur de la bande. La huileuse 28 sert à assurer la protection de la tôle décapée contre l'oxydation. La cisaille 29 sectionne la bande 2 en fin de bobine, et les enrouleurs 30, qui fonctionnent alternativement, assurent l'embobinage de la bande 2 décapée.

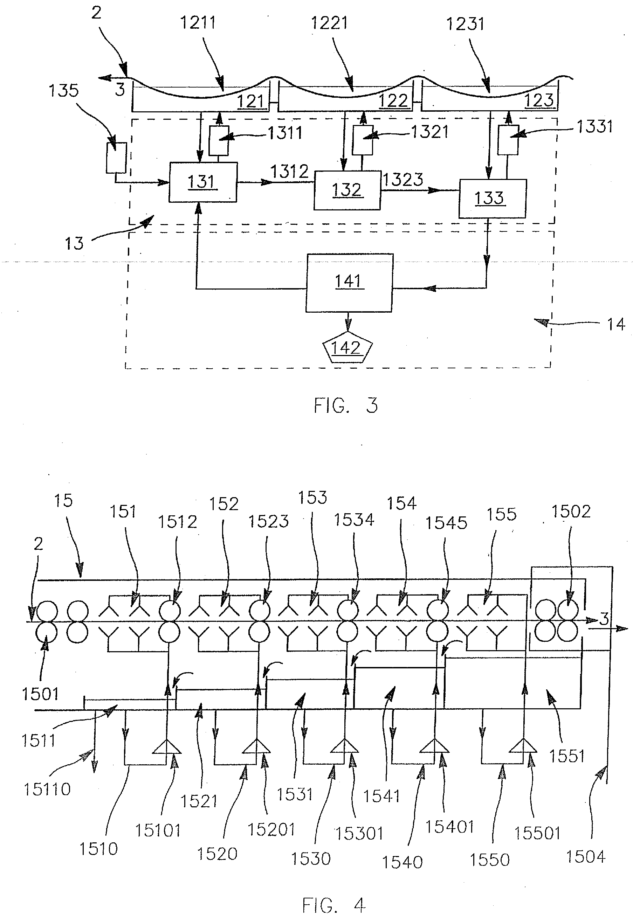

L'opération de fragmentation des oxydes, qui a pour but d'accélérer globalement l'opération de décapage de la bande, est typiquement réalisée dans un dispositif de fragmentation des oxydes 11, comme par exemple celui représenté schématiquement sur la figure 1 et de manière plus détaillée sur la figure 2. Il s'agit d'un dispositif 11 permettant la fragmentation de la couche de calamine par la technique dite de « planage sous traction », qui comprend la flexion alternée de la bande 2 sur des cylindres de travail 111, qui sont supportés par des galets d'appui 112, la bande 2 étant soumise à un allongement imposé par des tensionneurs d'entrée 113 et de sortie 114. L'allongement peut atteindre 2%. L'exemple de dispositif de fragmentation 12 représenté sur la figure 3 est l'un des dispositifs les plus couramment utilisés dans les lignes de décapage en continu. Un tel dispositif 11 permet en outre d'améliorer la planéité de la bande 2 à décaper.

L'opération de décapage proprement dite consiste à faire réagir les oxydes de fer (« calamine ») avec la solution acide de décapage. Différentes réactions chimiques se déroulent dans cette solution de décapage en fonction de la nature chimique de la couche de calamine.

En effet, quand la bande est chaude, entre la sortie de la dernière cage finisseuse du laminoir à chaud et la bobineuse, la calamine présente alors une structure consistant en une superposition de protoxyde FeO, de magnétite Fe₃O₄ et d'un peu d'hématite Fe₂O₃. Lors du refroidissement des bobines à l'air ambiant, les têtes et queues de bande ainsi que les rives se refroidissent rapidement, et la calamine évolue vers une structure de Fe₃O₄ et de Fe₂O₃, Le reste de la bande se refroidissant plus lentement, la calamine qui s'y forme est alors essentiellement composée d'eutectique Fe₃O₄-Fe avec éventuellement un peu de FeO résiduel.

Ainsi, lors du décapage dans une solution de décapage à base d'acide chlorhydrique, se développent les réactions chimiques suivantes :

(1) FeO + 2HCl → FeCl₂ + H₂O

(2) Fe₂O₃ + 6HCl → 2FeCl₃ + 3H₂O

(3) Fe₃O₄ + 8HCl → FeCl₂ + 2FeCl₃ + 4H₂O

(4) Fe + 2HCl → FeCl₂ + H₂gaz

(5) 2FeCl₃ + Fe → 3FeCl₂

Ces réactions montrent qu'au cours du décapage la solution de décapage tend globalement à s'appauvrir en acide et à se charger corrélativement en chlorures de fer. Un processus de décapage en continu nécessitant de maintenir les caractéristiques de la solution de décapage les plus constantes possibles, celle-ci doit nécessairement être régénérée dans des unités dites de « régénération », qui sont disposées en ligne avec l'installation de décapage et qui fonctionnent par injection dans un four ou dans un réacteur. D'autre part, des inhibiteurs sont utilisés afin de limiter l'attaque de l'acier nu par l'acide, particulièrement en cas d'arrêt de la bande dans le bain.

L'appauvrissement de la solution de décapage en acide, le débit de la solution de décapage entraîné par la bande vers l'aval de l'installation de décapage, la nécessité de la renouveler et d'assurer le meilleur équilibre possible de concentration entre les bacs successifs du dispositif de décapage ont conduit à adopter un dispositif de décapage tel que celui représenté sur la figure 3. Celui-ci comprend une pluralité de bacs de décapage 121, 122, 123 (généralement en nombre égal ou supérieur à 3), qui sont remplis chacun d'une solution de décapage 1211, 1221, 1231 comprenant notamment de l'acide sulfurique ou de l'acide chlorhydrique.

Ces bacs 121, 122, 123 sont disposés en série les uns derrière les autres suivant une direction longitudinale de défilement de la bande 2, de manière que la bande défile successivement en passant de l'un à l'autre (en l'occurrence du bac 123 au bac 121, en passant par le bac 122).

Des moyens de commande de défilement de la bande 2 (non représentés sur la figure 3), par exemple une bobineuse sont classiquement disposés en sortie de l'installation de décapage 1. Ces moyens de commande permettent d'entraîner la bande 2 suivant la direction de défilement pour qu'elle passe successivement dans les différents bacs de décapage 121, 122, 123 en formant à l'intérieur de chacun d'eux une courbe-concave dirigée vers le haut (courbe dite « du type chaînette ») qui est immergée dans la solution de décapage 1211, 1221, 1231 contenue dans chacun des bacs 121, 122, 123.

Outre les bacs de décapage 121, 122, 123, l'installation de décapage représentée sur la figure 1 comporte un circuit de recirculation 13 et un circuit de régénération 14 de la solution de décapage 1211, 1221, 1231.

Le circuit de recirculation 13 comporte une pluralité de réservoirs de stockage 131, 132, 133 qui sont chacun associés à un bac de décapage 121, 122, 123 par l'intermédiaire d'unités de pompage et de réchauffage par échangeurs 1311, 1321, 1331.

Les réservoirs de stockage 131, 132, 133 sont également reliés entre eux par des conduites 1312, 1323, de façon à ménager dans l'installation de décapage en sens inverse du sens de circulation 3 de la bande 2 dans l'installation de décapage 1.

Le circuit de régénération 14 comporte une unité de pyrohydrolyse 141 pour transformer les chlorures de fer formés lors de l'attaque acide en oxydes de fer, et un bac de récupération 142 pour recueillir les oxydes sous forme de bacs.

L'unité de pyrohydrolyse 141 est reliée au premier réservoir de stockage 133 et au dernier réservoir de stockage 131 rencontrés dans le sens de défilement 3 de la bande 2 dans l'installation 1, d'autre part, le bac de récupération des bacs 142 n'étant relié qu'à l'unité de pyrophydrolyse 141, de manière que la solution de décapage chargée en chlorures de fer est captée au niveau du premier réservoir de circulation 133 puis régénérée dans l'unité de pyrohydrolyse 141 selon les réactions 6, 7, où les chlorures de fer sont transformés en oxydes :

(6) 2FeCl₂ + 2H₂O + ½ O₂ → Fe₂O₃ + 4HCl (6)

(7) 2FeCl₃ + 3H₂O = Fe₂O₃ → 6HCl (7)

La solution de décapage ainsi régénérée est alors réintroduite dans le dernier réservoir de circulation 131.

Les équilibres de concentration en acide entre les différents bacs 121, 122, 123 sont définis de manière connue par le débit de solution de décapage 1211, 1221, 1231 qui a été entraînée par la bande 2 défilant de bac en bac (soit du bac 123 au bac 121, en passant par le bac 122), et par le débit de la cascade inverse entre les réservoirs de stockage 131, 132, 133 (soit du réservoir 131 au réservoir 133, en passant par le réservoir 132).

Un appoint en acide régénéré et, si nécessaire, en acide neuf 135, est réalisé au niveau du réservoir de circulation 131.

La concentration en acide libre est donc maximale dans le dernier bac de décapage 121 où elle peut atteindre 200 g/l et diminue dans les bacs amont 122, 123, où elle n'atteint que quelques dizaines de g/l dans le premier bac 123. Corrélativement, l'unité de pompage et de réchauffage 1331 permet de maintenir une puissance de chauffe qui est supérieure dans le premier bac 123 afin de réchauffer la bande 2 et d'assurer son décapage malgré une faible concentration en acide.

Une fois la calamine éliminée par fragmentation de la calamine par attaque acide, il peut se produire que la solution acide attaque la bande 2 nue, notamment en cas d'arrêt du défilement de la bande 2 et de séjour prolongé dans les bacs de décapage 121, 122, 123 sur la bande 2. Cette attaque non souhaitée, communément appelée « sur-décapage », produit les effets suivants :
▪ perte en poids,
▪ variation de la rugosité de surface,
▪ changement de coloration,
▪ création de taches à la surface,
▪ génération exagérée d'hydrogène pouvant localement s'accumuler et créer un danger d'explosion.

Pour éviter cela, on ajoute généralement un inhibiteur dans la solution de décapage 1211, 1221, 1231. Le bon titrage initial de cet inhibiteur permet certes d'éviter tout risque de sur-décapage en fonctionnement normal de l'installation 1, mais peut toutefois se révéler nettement insuffisant en cas d'arrêt de défilement de la bande et de séjour prolongé dans les bacs de décapage.

Après le décapage acide, la bande 2 doit être rincée afin d'éliminer l'acide et les chlorures de fer présents sur les surfaces de la bande 2. Le rinçage est généralement réalisé dans une unité de rinçage 15, telle que celle représentée sur la figure 4. Il s'agit d'une unité de rinçage classiquement utilisée dans les lignes de décapage en continu. Cette unité de rinçage 15 comporte :
- des batteries de rampes de pulvérisation 151, 152, 153, 154, 155, qui sont disposées de manière à pouvoir asperger la bande 2 à décaper sur ses deux faces lorsqu'elle défile au travers de l'unité de rinçage 15,
- une pluralité de bacs d'écoulement 1511, 1521, 1531, 1541, 1551, qui sont chacun disposés sous une rampe de pulvérisation 151, 152, 153, 154, 155 respectivement pour récupérer l'eau pulvérisée par les rampes 151, 152, 153, 154, 155, chacun des bancs d'écoulement 1521, 1531, 1541, 1551 s'écoulant par trop plein dans le bac qui lui est contigu en formant une cascade s'écoulant en sens inverse du sens de circulation 3 de la bande 2, et
- des dispositifs essoreurs à rouleaux 1501, 1502 disposés à l'entrée et à la sortie de l'unité de rinçage 15, ainsi que des dispositifs essoreurs à rouleaux 1512, 1523, 1534, 1545 disposés entre chaque batterie de rampes 151, 152, 153, 154, 155.

Le rinçage est habituellement réalisé par une cascade à contre-courant fonctionnant comme suit : la bande 2 traverse l'unité de rinçage 15, où elle est aspergée, sur ses deux faces, d'eau, de préférence déminéralisée, par les batteries de rampes de pulvérisation 151, 152, 153, 154, 155. Les dispositifs essoreurs à rouleaux permettent d'empêcher l'entraînement par la bande 2 d'acide dilué dans l'eau,

L'eau s'écoulant sous chaque batterie 151, 152, 153, 154, 155 est récupérée dans le bac d'écoulement 1511, 1521, 1531, 1541, 1551 qui lui correspond, le trop plein de chaque bac 1511, 1521, 1531, 1541, 1551 s'écoulant dans celui qui lui est contigu dans le sens inverse du défilement 3 de la bande 2.

Chaque bac d'écoulement 1511, 1521, 1531, 1541, 1551 est par ailleurs équipé d'un circuit de recirculation 1510, 1520, 1530, 1540, 1501, 1502 qui comporte chacun une pompe 15101, 15201, 15301, 15401, 15501. L'eau de rinçage alors chargée d'acide 15510 est récupérée dans le premier bac d'écoulement 1511 rencontré dans le sens de défilement 3 de la bande 2, puis évacuée. Par ailleurs, un appoint en eau déminéralisée 15510 est situé au niveau du dernier bac d'écoulement 1551 rencontré.

Généralement, après les étapes de décapage acide et de rinçage, on procède à l'analyse des caractéristiques de surface d'une bande décapée et rincée. Cela permet de porter un premier jugement sur la qualité des opérations réalisées et, en fonction de ces résultats, de corriger ou d'optimiser certains paramètres tels que la vitesse V de défilement de la bande et les paramètres liés aux processus de la fragmentation des oxydes de décapage acide et de rinçage.

D'une manière générale, ces caractéristiques de surface sont définies suivant les caractéristiques suivantes :
▪ une bande bien décapée présente un aspect visuel uniforme, avec des variations de rugosité sur la largeur et la longueur de la bande qui sont faibles,
▪ une bande « sous-décapée » présente des taches brunes ou grises assez facilement détectables, pouvant être localisées dans le sens de la largeur de la bande, les variations de l'état de surface étant importantes entre les zones correctement décapées et celles qui l'ont été insuffisamment,
▪ une bande « sur-décapée » présente un aspect gris, par exemple après un arrêt prolongé dans les bacs de décapage. Cet aspect gris est facilement détectable à l'examen visuel.

Toutefois, des défauts visuels plus discrets dus à des réglages inadéquats de vitesse de défilement, de concentration d'inhibiteur, de température, ou de concentration d'acide ne peuvent être détectés à l'oeil nu et nécessitent des moyens d'acquisition et d'analyse d'image performants.

Par ailleurs, des analyses de variations de rugosité peuvent également compléter les analyses d'aspect.

Par conséquent, une opération de décapage en continu d'une bande d'acier en milieu acide dans une ligne de décapage en continu, telle que celle représentée sur la figure 1, nécessite la gestion d'un nombre important de paramètres réglables relatifs à la vitesse de défilement de la bande dans l'installation 1, la conduite de la fragmentation des oxydes dans le dispositif de fragmentation 11, celle du décapage proprement dit dans le dispositif de décapage 12, et celle du rinçage dans l'unité de rinçage 15.

La demande de brevet japonais JP 56-136982 propose un système de contrôle restreint à la seule mesure de la densité de la solution de décapage qui contrôle l'ouverture ou la fermeture d'une vanne d'addition d'acide neuf. La concentration en acide est calculée à partir de cette seule mesure de densité de la solution de décapage, par application de formules empiriques. Les autres paramètres de contrôle du bain d'acide, comme la température, ne sont pas pris en compte. Le système de contrôle décrit dans JP 56-136982 est toutefois peu adapte : d'une part, la diminution de la concentration en acide due aux réactions chimiques 1 à 4 précédemment citées est un phénomène lent, et, d'autre part, l'appoint en acide frais se heurte à une importante constante de temps, conduisant à des fluctuations très importantes de la variable contrôlée.

Dans ce domaine, on connaît également le brevet US 6,396,280 qui décrit un système de contrôle de la concentration en acide, avec lequel il est possible de mesurer en continu la concentration en acide dans deux bacs consécutifs, ce qui permet de doser l'appoint d'acide. Bien que proche dans son principe de la demande de brevet JP 56-136982, le brevet américain US 6,396,280 revendique la limitation des fluctuations de la concentration en acide. Toutefois, un seul paramètre est contrôlé, et le résultat de l'opération de décapage n'est pas pris en compte en tant que paramètre de contrôle.

La demande de brevet US 2002/0130666 décrit un dispositif complet de mesure qui est externe au bac de décapage. Ce dispositif, qui est équipé d'une sonde de température et d'un conductivimètre, permet de mesurer la densité de la solution de décapage par différence de hauteur de liquide dans une colonne. Ce dispositif permet effectivement d'adapter la conduite du décapage en continu, mais il ne permet pas de discriminer l'impact relatif des concentrations en acide et en chlorures ferreux dans les mesures.

Par contre, le brevet américain US 5,175,502 décrit un système plus précis visant à discriminer les effets de la concentration en acide et de celle en chlorures ferreux par réalisation, à température régulée, de mesures de la densité de la solution de décapage non diluée provenant d'un bac de décapage, et de la conductivité de la même solution de décapage, mais diluée de manière contrôlée avec de l'eau. La conductivité varie peu avec la concentration en chlorures de fer pour une concentration en acide faible (par exemple de l'ordre de 25 g/l). La valeur de conductivité ainsi mesurée est alors considérée comme indépendante de la teneur en chlorures de fer, et donc représentative de la seule teneur en HCl. Connaissant le taux de dilution utilisé pour la mesure, il est alors facile d'extrapoler la concentration en acide dans le bac de décapage et d'en déduire la concentration en chlorures de fer. Toutefois, les techniques mises en oeuvre pour la mesure de cette concentration en acide ne permettent pas d'exercer un contrôle sur cette concentration.

Rien dans les systèmes de l'art antérieur décrits ci-dessus ne permet d'optimiser l'opération de décapage dans son ensemble,

Pour remédier à cela, l'homme de l'art connait un procédé de décapage contrôlé par un processus global qui gère l'opération de décapage dans son ensemble. Ainsi, le brevet US 6,419,756 décrit un procédé de décapage d'une bande métallique laminée en défilement dans une installation de décapage, qui comprend :
∘ le réglage de paramètres du décapage par un opérateur, par exemple la température de la solution de décapage ;
∘ la mesure à l'aide d'un instrument de mesure optique de défauts sur la bande métallique, qui sont classifiés en différentes catégories de défauts et comptés par un classifieur pour définir les fréquences d'apparition de ces catégories de défauts;
∘ l'envoi de ces fréquences d'apparition de catégories de défauts à un évaluateur, qui peut être un évaluateur flou (« fuzzy evaluator »), un réseau neuronal (« neural network ») ou un évaluateur à commande neurofloue (« neural fuzzy evaluator ») ; et enfin
∘ l'évaluation par l'évaluateur du résultat du décapage, qui est une fonction des paramètres de réglage du décapage, a partir de laquelle l'évaluateur définit des consignes pour l'un au moins des paramètres de réglage du décapage. Un tel système présente l'inconvénient d'agir sur l'un quelconque des paramètres de réglage. Dans le mode de réalisation décrit dans le brevet US 6,419,756, il s'agit de préférence de la température de la solution de décapage. Or, une telle modification présente l'inconvénient majeur de ne pas avoir d'effet immédiat en raison de l'inertie inhérente à une installation de décapage.

La demande de brevet EP-A-1-106713 décrit un procédé et une installation de décapage d'une bande métallique à chaud. En cas de sous-décapage, la bande en défilement dans la dite installation est ralentie. Ce document ne décrit toutefois pas si et comment une mesure et un calcul en continu des paramètres de décapage sont effectués, de sorte qu'un contrôle des paramètres de décapage, en particulier lors d'un rinçage (non explicité dans le document), reste inabordé.

La présente invention a donc pour objet un
procédé de décapage qui remédie aux inconvénients de l'art antérieur par la mise en place d'un processus global de contrôle qui agit directement sur la
vitesse de défilement de la bande par une diminution
par paliers de celle-ci, et qui n'implique pas de modifier les paramètres de réglage du décapage. La présente invention a également pour objet une installation pour la mise en oeuvre du procédé de l'invention.

Plus particulièrement, la présente invention a
pour objet un procédé de décapage d'une bande métallique en défilement continu dans une installation de ligne continue de décapage, qui comprend successivement une étape de fragmentation des oxydes formés à la surface de ladite bande lors du laminage à chaud, une étape de décapage acide, une étape de rinçage de la bande, et une étape de séchage la bande étant entraînée avec une vitesse de défilement V dans ladite installation suivant une direction longitudinale de défilement perpendiculaire à la largeur de la bande, la vitesse V de défilement de la bande étant contrôlée par un ensemble de débobinage et de bobinage, et chacune des étapes du décapage étant contrôlée par des actionneurs pouvant agir sur des paramètres de réglage de la ligne de décapage, l'action ou l'absence d'action d'un actionneur sur un paramètre de réglage donné étant identifiée par une donnée d'état.

Le procédé de décapage de l'invention comprend par ailleurs un processus global de contrôle du décapage, qui met en oeuvre :
∘ la mesure en continu d'au moins une partie des paramètres de réglage du décapage, ladite mesure étant mise en oeuvre pendant le décapage ;
∘ une phase de commande qui est mise en oeuvre pendant le décapage, au cours duquel le processus global de contrôle définit et envoie des consignes de commande optimisées à l'ensemble des actionneurs à l'aide d'un système de commande prédictive ; et
∘ l'inspection en continu de la surface de la bande.

Selon l'invention, le processus global de contrôle du procédé de décapage comprend :
∘ une phase préalable de préparation, qui est mise en oeuvre en amont ou au début du décapage, au cours de laquelle le processus global de contrôle définit et envoie des consignes de préréglage à l'ensemble des actionneurs à l'aide d'un modèle analytique, qui peut être associé au système de commande prédictive ;
∘ le calcul en continu d'au moins une partie des paramètres de réglage du décapage, ledit calcul étant mis en oeuvre pendant le décapage ; et
∘ l'inspection en continu de la surface de la bande définit et envoie, en cas de sous-décapage, une consigne d'alarme à la phase de commande, qui diminue par paliers la vitesse de défilement V de la bande jusqu'à une vitesse de défilement corrigée V_{cor}, la diminution par paliers de la vitesse de défilement V s'effectuant jusqu'à ce que ce défaut ne soit plus détecté et ne déclenche plus de consigne d'alarme.

Par donnée d'état d'un actionneur, on entend au sens de la présente invention, une donnée qui renseigne sur l'état de réglage de fonctionnement ou de non fonctionnement de l'actionneur.

Par modèle analytique, on entend, au sens de la présente invention, une modélisation des paramètres de réglage, qui est réalisée soit à l'aide d'équations, soit à l'aide de tables de préréglage préétablies.

L'utilisation d'un modèle analytique et d'un système de commande prédictive présente l'avantage de pouvoir de déterminer les vitesses de décapage en fonction des paramètres de réglage et des mesures de ces paramètres de manière plus précise qu'avec des modèles neuronaux ou de commande floue ou neurofloue, comme c'est le cas dans le brevet US 6,419,756, et ce, sans nécessiter d'apprentissage.

De manière avantageuse, le modèle prédictif du processus global de contrôle corrige les consignes de commande adressées à l'ensemble des actionneurs autres que la vitesse de défilement V de la bande, en fonction de la correction effectuée sur la vitesse de défilement V_{cor}, et de manière à maintenir satisfaisante l'évaluation faite lors de l'inspection de la surface de la bande.

L' inspection en continu de la surface de la bande conduit également en cas de détection de défaut de rinçage, à une modification par paliers du pH de l'eau de rinçage, jusqu'à ce que ce défaut ne soit plus détecté.

De manière avantageuse, le calcul permet de déterminer les concentrations en acide et en fer dans la solution de décapage, qui sont mises en oeuvre lors du décapage acide.

De manière avantageuse, la phase de préparation comprend les opérations suivantes :
▪ recevoir des données d'état en provenance des actionneurs, des données d'exploitation, et des valeurs cibles des paramètres de réglage établies par le modèle analytique pour optimiser le décapage de la bande ;
▪ établir des consignes de préréglage de chaque actionneur ;
▪ adresser à chaque actionneur ces consignes de préréglage ;
▪ établir les données d'entrée pour la phase de commande;
▪ adresser ces données d'entrée à la phase de commande.

Par données d'exploitation, on entend, au sens de la présente invention, des données relatives à la bande à décaper le format de la bande, la nuance de l'acier constitutif de la bande, ou encore des données relatives à la calamine formée lors du laminage à chaud (nature des oxydes formés, quantité par exemple).

Selon un mode de réalisation particulièrement avantageux de la phase de préparation du procédé de l'invention, le modèle analytique comprend un sous-modèle analytique associé à chaque actionneur pour définir ladite consigne de préréglage du paramètre de réglage sur lequel agit l'actionneur associé.

De manière avantageuse, la phase de commande comprend les opérations suivantes :
▪ recevoir de manière continue et en temps réel des données d'état en provenance des actionneurs, des informations en provenance des moyens de mesure et de calcul, et les données d'entrée pour la phase de commande établies lors de la phase de préparation ;
▪ établir des signaux de commande optimisés à chaque actionneur ; et
▪ adresser lesdits signaux de commande aux actionneurs.

Selon un mode de réalisation particulièrement avantageux de la phase de commande du procédé de l'invention, le système de commande prédictive comprend une boucle primaire de régulation permettant d'assurer le fonctionnement optimisé de chaque actionneur sur la consigne de commande qui lui est adressée.

De manière avantageuse, la phase d'inspection de la bande comprend l'inspection optique de l'aspect de la surface de la bande et la mesure de variation d'au moins une caractéristique de l'état de surface de la bande.

A titre d'exemple de caractéristique de l'état de surface de la bande, on peut notamment citer la rugosité moyenne Ra, la rugosité maximale Rm (valeur crête à crête), et le nombre de pics par cm.

De préférence, l'inspection optique (5001) de l'aspect de la surface de la bande (2) et la mesure de variation de l'état de surface (5002) de la bande (2) comprennent l'apprentissage des zones suspectes par rapport à une bibliothèque d'images et/ou de données permettant de discriminer les défauts de sur-décapage, ou de sous-décapage, ou encore l'absence de défauts.

La présente invention a également pour objet une installation de ligne continue de décapage d'une bande métallique laminée à chaud et en défilement continu dans ladite installation, ladite installation comprenant :
∘ un dispositif de fragmentation des oxydes formés à la surface de la bande, ledit dispositif de fragmentation des oxydes étant réglable par l'intermédiaire de paramètres de réglage de la fragmentation,
∘ un dispositif de décapage, qui est réglable par l'intermédiaire de paramètres de réglage du décapage, et
∘ un dispositif de rinçage, qui est réglable par l'intermédiaire de paramètres de réglage du rinçage,
∘ un dispositif de séchage, et
∘ un ensemble de moyens de mesure et de calcul des paramètres de réglage de ladite installation,
∘ un ensemble d'actionneurs, destinés à agir sur les paramètres de réglage de ladite installation.

Selon l'invention, l'installation de ligne continue de décapage comporte en outre :
o un système centralisé de commande pour optimiser le décapage de la bande métallique, ledit système de commande comprenant :
   ▪ un module de préparation destiné à recevoir des informations provenant de l'ensemble des moyens de mesure et de calcul et des actionneurs, et à définir et envoyer des consignes de préréglage à l'ensemble des actionneurs,
   ▪ un module de commande destiné à recevoir des informations provenant de l'ensemble des moyens de mesure et de calcul et des actionneurs, et à définir et envoyer des consignes optimisées de commande à l'ensemble des actionneurs, et
o un système d'inspection de la bande disposé à la sortie du dispositif de rinçage, ledit système d'inspection étant apte à définir et envoyer une consigne d'alarme au module de commande pour agir sur la vitesse de défilement V de la bande.

Avantageusement, le système d'inspection est également apte à définir et envoyer une consigne de commande au module de commande pour agir sur des paramètres de réglage du rinçage.

Avantageusement, l'ensemble des moyens de mesure et de calcul comporte :
- un ensemble de moyens de mesure comprenant des moyens de mesure de la vitesse de défilement V de la bande, des moyens de mesure des paramètres de réglage de la fragmentation des oxydes, des moyens de mesure d'au moins une partie des paramètres de réglage du décapage, et des moyens de mesure des paramètres de réglage rinçage, et
- des moyens de calcul d'au moins une partie des paramètres de réglage du décapage.

Avantageusement, les moyens de calcul sont aptes à déterminer les concentrations en acide et en ions ferreux dans la solution de décapage mise en oeuvre dans le dispositif de décapage.

Avantageusement, l'ensemble des actionneurs comprennent des actionneurs de la fragmentation destinés à agir sur les paramètres de réglage de la fragmentation des oxydes, des actionneurs du décapage destinés à agir sur les paramètres de réglage du décapage, et des actionneurs de rinçage destinés à agir sur les paramètres de réglage du rinçage.

L'installation de décapage selon l'invention permet la mise en oeuvre du procédé selon l'invention.

Ainsi, dans le cas où le procédé de l'invention est mis en oeuvre dans l'installation selon l'invention, la phase de préparation du procédé de l'invention est réalisée par le module de préparation, qui établit, à l'aide du modèle analytique des consignes de préréglage des différents actionneurs de l'installation selon l'invention, à partir des données d'état issues des différents actionneurs, des données d'exploitation concernant la bande à décaper, et des valeurs cibles des paramètres de réglage.

Par valeurs cibles, on entend, au sens de la présente invention, les valeurs optimales des paramètres de réglage que le processus global de contrôle cherche à atteindre.

Le calcul d'une partie des paramètres de réglage du décapage est réalisé par les moyens de calcul de l'installation de décapage selon l'invention. Ces moyens peuvent de manière avantageuse permettre de déterminer, à partir de mesures de densité et de conductivité de la solution de décapage dans les réservoirs de stockage, les concentrations en acide et en fer de la solution en décapage dans ces réservoirs de stockage.

La mesure d'une partie des paramètres de réglage du décapage est réalisée, au cours du décapage, par l'ensemble des différents moyens de mesure disposés dans la ligne de décapage.

La phase de commande est réalisée par le module de commande qui, à partir des données d'état en provenance des actionneurs, des informations en provenance des moyens de mesure et de calcul, et des données d'entrée du système de commande prédictive établies lors de la phase de préparation, établit des consignes de commande qu'il adresse aux différents actionneurs de la ligne de décapage, dont il reçoit en retour des données d'état, qui sont corrigées à chaque itération du processus global de contrôle.

La phase d'inspection de surface de la bande est réalisée par le système d'inspection de surface de l'installation selon l'invention, qui est indépendant du système centralisé de commande.

Ce système d'inspection de surface peut avantageusement comprendre :
- un système d'inspection de l'aspect de la surface de la bande, et qui permet notamment de déterminer la présence de taches sur la surface de la bande, ainsi que leur couleur, leur localisation et leur importance, et
- un système de mesure de l'état de surface, qui permet notamment de mesurer des variations d'au moins une caractéristique de l'état de surface de la bande tels que la rugosité moyenne Ra, la rugosité maximale Rm ou le nombre de pics par cm.

Selon un mode de réalisation particulièrement avantageux de la présente invention en cas de sous-décapage, si l'un seulement du système d'inspection de l'aspect de la surface et du système de mesure de l'état de surface détecte un défaut et envoie une consigne d'alarme au module de commande qui l'envoie à l'opérateur, qui n'agit sur la vitesse de défilement V de la bande que lorsque l'autre du système de mesure de l'état de surface et du système d'inspection de l'aspect de la surface détecte également ledit défaut.

Le système d'inspection de l'aspect surface de la bande, utilisable dans l'installation selon l'invention, peut être principalement composé :
▪ d'un dispositif d'éclairage de la bande en défilement tel que celui décrit dans la demande de brevet français FR 2892191,
▪ d'un dispositif d'acquisition d'image, par exemple constitué d'une caméra CCD tel que celui décrit dans la demande de brevet français FR 2893519, et
▪ d'une fonction de traitement d'images (FTI) permettant d'éliminer les perturbations telles que les non-uniformités d'éclairement ou de réflexion de lumière,
▪ d'une fonction de détection de contours ou de seuils de gris (FD),
▪ d'une fonction d'extraction et de caractérisation morphologique et photométrique de zones suspectes (FE),
▪ d'une fonction de classification et d'identification (FCI) par apprentissage des zones suspectes par rapport à une bibliothèque d'images, capable de discriminer les défauts de type « sous décapage » ou « sur décapage » ou intrinsèques à la bande d'acier précédemment décrits, ou encore l'absence de défauts.

Le dispositif d'inspection de l'aspect surface de l'installation selon l'invention permet de détecter les défauts de décapage à la surface de la bande, comme par exemple le sur-décapage ou le sous-décapage, ou encore des taches qui subsistent après rinçage.

Le dispositif d'éclairage du dispositif d'inspection de l'aspect surface peut avantageusement comporter une rampe d'éclairage capable d'éclairer toute la largeur de la bande dans au moins une bande du spectre visible et une caméra couleur CCD captant la lumière réfléchie par la bande.

La fonction de traitement (FTI) de ce dispositif d'inspection de l'état de surface sert à éliminer les perturbations telles que les non-uniformités d'éclairement ou de réflexion de lumière, d'une fonction de détection de contours ou de seuils de gris, d'une fonction d'extraction et de caractérisation morphologique et photométrique de zones suspectes.

Enfin la fonction de classification et d'identification par apprentissage des zones suspectes par rapport à une bibliothèque d'images de ce dispositif sert à discriminer les défauts de type « sous décapage » ou « sur décapage » ou intrinsèques à la bande d'acier ou l'absence de défauts.

Le système d'inspection de l'aspect de surface de l'installation selon l'invention permet d'examiner en continu toute la largeur de la bande en défilement. A titre d'un tel système d'inspection de l'aspect de surface, on peut utiliser celui décrit dans la demande de brevet internationale WO2006/134259,

Par ailleurs, le système de mesure de l'état de la surface utilisable dans l'installation selon l'invention peut être principalement composé d'un dispositif optique, qui est pourvu fonctions suivantes :
▪ une fonction de traitement de signal (FTS) permettant de détecter les variations d'au moins une caractéristique de profil (cas 1) ou de diffusion (cas 2) ou de spectre lumineux réfléchi (cas 3) de zones suspectes,
▪ une fonction de classification (FC) par apprentissage des zones suspectes par rapport à une base de données, capable de discriminer les défauts et l'absence de défauts.

Ce système de mesure d'état de surface permet d'examiner en continu au moins une ligne située au milieu de la largeur de la bande en défilement, et préférentiellement trois lignes situées pour l'une au milieu de la largeur de la bande et, pour les deux autres, dans une zone située entre le tiers et le quart de la largeur de bande à partir de chaque rive de la bande décapée.

A titre de dispositif optique utilisable dans le système de mesure d'état de surface de la bande selon l'invention, on conseille un scanner à triangulation laser linéaire ou ponctuel, procédant soit par mesure de profil, (cas 1) soit par dispersion (cas 2), ou, en alternative, un dispositif optique à chromatisme axial (cas 3).

Si l'on utilise un dispositif scanner à triangulation laser procédant par mesure de profil, celui-ci évalue l'état de surface de la bande décapée par mesure du profil de la surface illuminée par le faisceau du laser.

Le faisceau du dispositif scanner à laser peut être soit une ligne (on parle alors d'un Scanner Laser ligne ou linéaire), soit un point (on parle alors d'un Scanner Laser ponctuel).

Si l'on utilise un dispositif scanner à triangulation laser procédant par dispersion, celui-ci évalue l'état de surface de la bande décapée par émission d'au moins deux faisceaux selon des incidences différentes, l'état de surface de la bande décapée est alors évaluée par détection des différences de diffraction des faisceaux par la surface illuminée.

Si l'on utilise un dispositif optique à aberration chromatique axiale, celui-ci évalue l'état de surface de la bande décapée par analyse spectrale de la lumière focalisée sur la surface éclairée en lumière blanche par le dispositif optique.

Le dispositif optique du système de mesure d'état de surface selon l'invention est avantageusement fixé au-dessus du centre de la bande décapée.

Selon un premier mode de réalisation particulièrement avantageux de l'invention, on utilisera deux dispositifs scanners à laser ou laser à dispersion ou optique à aberration chromatique axiale, qui sont de préférence situés au-dessus de la bande en défilement, à une distance de ses bords (ou rives) comprise entre un quart et un tiers de la largeur de la bande.

Selon un deuxième mode de réalisation également particulièrement avantageux de l'invention, on utilisera deux dispositifs scanners à laser, qui sont fixés au-dessus de la bande décapée à une distance de ses bords (rives) comprise entre un quart et un tiers de sa largeur et qui sont associés à un autre dispositif de même type, qui est lui fixé au-dessus du centre de la bande.

Enfin, le système de contrôle de l'installation est de manière avantageuse, également apte à envoyer des données à un système de contrôle général contrôlant la gestion des installations de transformation de la bande en aval et/ou en amont de ladite installation de décapage.

D'autres caractéristiques avantageuses de l'invention apparaîtront dans la description suivante de certains modes de réalisation donnés à titre de simples exemples et représentés sur les dessins annexées :
- la figure 1 est un schéma de principe d'un exemple d'installation de ligne continue de décapage de l'art antérieur,
- la figure 2 est un schéma de principe d'un exemple de dispositif de fragmentation des oxydes connu de l'art antérieur et destiné à être utilisé dans une installation de ligne continue de décapage,
- la figure 3 est un schéma de principe d'un exemple de dispositif de décapage connu de l'art antérieur et destiné à être utilisé dans une installation de ligne continue de décapage,
- la figure 4 est un schéma de principe d'un exemple d'unité de rinçage 15 connue de l'art antérieur et destinée à être utilisée dans une installation de ligne continue de décapage,
- la figure 5 est un schéma de principe d'un exemple d'installation de ligne continue de décapage selon l'invention,
- la figure 6 est un diagramme représentant les différentes phases du processus global de contrôle du procédé de l'invention.

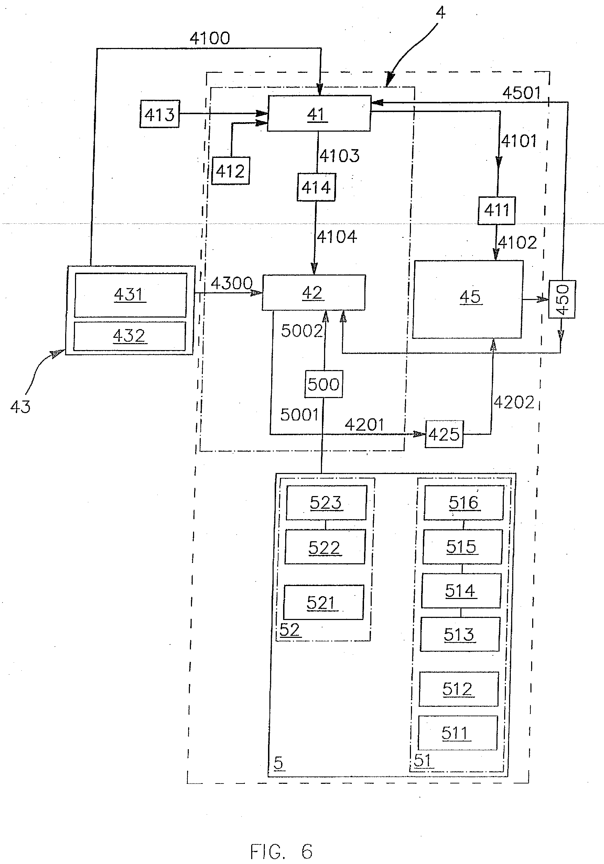

Les éléments identiques représentés sur les figures 1 à 6 sont identifiés par des références numériques identiques.

L'installation de ligne continue de décapage 1 représentée sur la figure 1 a été précédemment décrite dans la référence de l'art antérieur qui précède.

De même, le dispositif de fragmentation 12 représenté sur la figure 2, le dispositif de décapage 12 représenté sur la figure 3, ainsi que l'unité de rinçage 15 représentée sur la figure 4 ont également été précédemment décrits dans la référence à l'art antérieur qui précède.

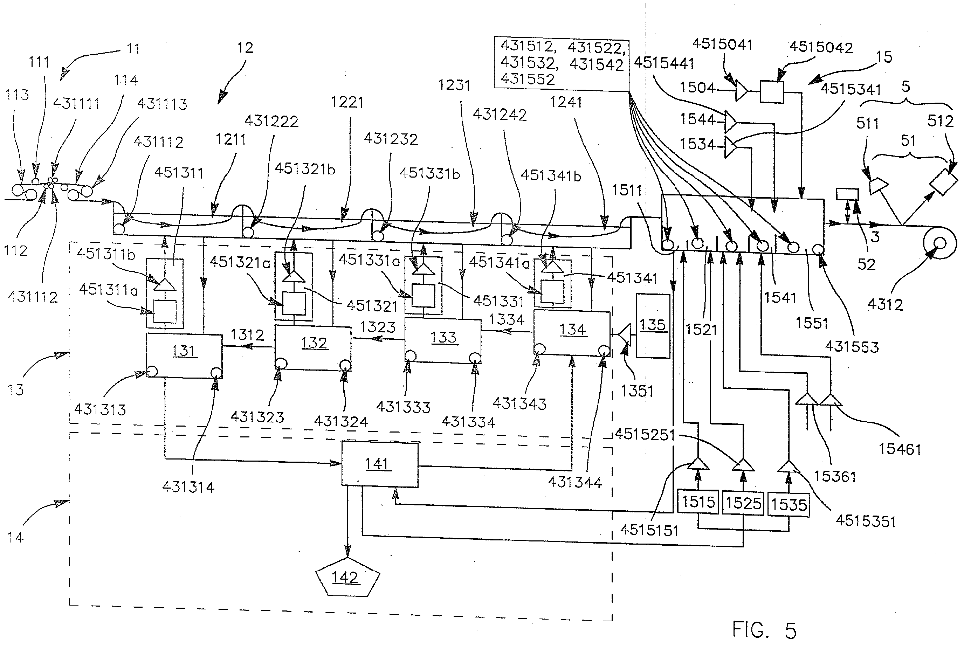

L'installation de décapage selon l'invention représentée sur la figure 5 comprend notamment :
- un dispositif de fragmentation 11 des oxydes formés à la surface de la bande d'acier 2 lors du laminage à chaud,
- un dispositif de décapage 12 pour l'attaque acide des oxydes, et
- une unité de rinçage 15 pour l'élimination de l'acide (et notamment l'acide chlorhydrique) et des chlorures de fer présents à la surface de la bande.

Le dispositif de fragmentation 11, le dispositif de décapage 12 et l'unité de rinçage 15 sont disposés en série dans l'installation 1 de décapage selon l'invention, de manière que la bande 2 à décaper traverse successivement, lorsqu'elle est en défilement continu dans l'installation de décapage 1, le dispositif de fragmentation 11, puis le dispositif de décapage 12, et l'unité de rinçage 15.

A titre de dispositif de fragmentation 11 utilisable dans l'installation selon l'invention, on peut notamment utiliser celui représenté sur la figure 2, qui comprend notamment :
- des actionneurs 45111, 451112 contrôlant l'imbrication 1112 des cylindres de travail 111 via la différence de hauteur 1111 entre le (ou les) cylindre (s) de travail le plus bas et le (ou les) cylindre(s) de travail le plus élevé(s) entre lesquels la bande 2 est aplanie, et
- un actionneur 451113 contrôlant la traction 451113 exercée entre les tensionneurs d'entrée 113 et de sortie 114.

A titre de dispositif de décapage 12 utilisable dans l'installation 1 selon l'invention représentée sur la figure 5, on conseille celui représenté sur la figure 3, dans lequel on ajoute :
- un dispositif d'appoint en acide 135 au niveau du dernier réservoir de stockage 134 rencontré dans le sens de défilement 3 de la bande 2, et
- un ensemble de moyens de mesure des paramètres de réglage du décapage 431212, 431222, 431232, 431242, 431313, 431323, 431333, 431343, 431314, 431324, 431334, 431344 et
- un ensemble d'actionneurs 451311, 451311a, 451311b, 431321, 451321a, 451321b, 451331, 451331a, 451331b, 431341, 451341a, 451341b agissant sur lesdits paramètres de réglage de décapage.

Les moyens de mesure 431212, 431222, 431232, 431242, 431313, 431333, 431343, 431314, 431324, 431334, 431344 des paramètres de réglage du décapage comprennent :
- des moyens de mesure de la température 431212, 431222, 431232, 431242 de la solution de décapage 1211, 1221, 1231, 1241 contenue dans les différents bacs de décapage 121, 122, 123, 124,
- des moyens de mesure de la densité 431313, 431323, 431333, 431343 de la solution de décapage 1211, 1221, 1231, 1241 dans lesdits réservoirs de stockage 131, 132, 133, 134, et
- des moyens de mesure de la conductivité 431314, 431324, 431334, 431344 de la solution de décapage 1211, 1221, 1231, 1241 dans lesdits réservoirs de stockage 131, 132, 133, 134.

Dans l'installation de décapage 1 selon l'invention, les actionneurs 451311, 451311a, 451311b, 451321, 451321a, 451321b, 451331, 451331a, 451331b, 451341, 451341a, 451341b propres à agir sur les paramètres de réglage du décapage comprennent des unités de pompage et de réchauffage 451311, 451321, 451331, 451341 qui sont chacune associées à un bac de décapage 121, 122, 123, 124 et qui comportent chacune :
- un échangeur de chaleur 451311a, 451321a, 451331a, 451341a pour contrôler la température de la solution de décapage 1211, 1221, 1231, 1241 dans le circuit de recirculation 132 du dispositif de décapage 12, et
- une pompe 451311a, 451321b, 451331b, 451341b pour contrôler le débit de la solution de décapage 1211, 1221, 1231, 1241 dans le circuit de recirculation 13 du dispositif de décapage 12, et
- une pompe 451351 pour contrôler le débit d'appoint en acide 135 au niveau du dernier bac de stockage 134 rencontré dans le sens de défilement 3 de la bande 2.

A titre de dispositif de rinçage utilisable dans l'installation selon l'invention représentée sur la figure 4, on peut utiliser celui représenté sur la figure 4, qui comporte ;
- une pluralité de rampes de pulvérisation 151, 152, 153, 154, 155, qui sont alimentées en eau déminéralisée pour le rinçage, qui sont disposées de manière à pouvoir asperger d'eau la bande 2 sur ses deux faces 21, 22,
- une pluralité de bacs d'écoulement 1511, 1521, 1531, 1541, 1551, qui sont chacun disposés sous les rampes de pulvérisation 151, 152, 153, 154, 155 s'écoulant par trop plein d'eau dans le bac qui lui est contigu en formant une cascade s'écoulant en sens inverse du sens de circulation 3 de la bande 2,
- des dispositifs essoreurs à rouleaux 1501, 1502, disposés à l'entrée et à la sortie de l'unité de rinçage 15, ainsi que des dispositifs essoreurs à rouleaux 1512, 1523, 1534, 1545 disposés entre chaque batterie de rampes 151, 152, 153, 154, 155.

Le dispositif de rinçage 15 représenté sur la figure 5 comporte en outre (par rapport au dispositif de rinçage 15 de l'art antérieur représenté sur la figure 4) :
- un dispositif principal d'appoint en eau déminéralisée 1504 pour alimenter en eau de rinçage les rampes de pulvérisation 151, 152, 153, 154, 155 de l'unité de rinçage,
- deux dispositifs annexes d'appoint en eau déminéralisée 1534, 1544 pour alimenter, en fonction des besoins, les troisième 153 et quatrième 154 rampes de pulvérisation rencontrées dans le sens de défilement 3 de la bande 2,
- des dispositifs d'ajout d'acide 1515, 1525, 1535 dans les premiers bacs d'écoulement 1511, 1521, 1531 de l'unité de rinçage 15 rencontrés dans le sens du défilement 3 de la bande 2, et
- des dispositifs d'ajout d'un produit alcalin 1536, 1546 dans les troisième 1531 et quatrième 1541 bacs d'écoulement de l'unité de rinçage 15 rencontrés dans le sens du défilement 3 de la bande 2.

En outre, le dispositif de rinçage 15 de l'installation représentée sur la figure 5 comprend des moyens de mesure 431512, 431522, 431532, 431542, 431552, 431553, 431554 des paramètres de réglage du rinçage et des actionneurs 4515151, 4515251, 4515351, 4515361, 4515461, 4515341, 4515441, 4515041, 4515042 propres à agir sur ces paramètres de réglage du rinçage.

Les moyens de mesure 431512, 431522, 431532, 431542, 431552, 431553, 431554 des paramètres de réglage du rinçage permettant la mise en situation de fonctionnement du dispositif de rinçage 15 comprennent :
- des moyens de mesure du pH 431512, 431522, 431532, 431542, 431552 de l'eau de rinçage dans les bacs d'écoulement 1511, 1521, 1531, 1541, 1551 de l'unité de rinçage 15,
- des moyens de mesure de la conductivité 431553 de l'eau de rinçage contenue dans le dernier bac d'écoulement 1551 rencontré dans le sens de défilement 3 de la bande 2,
- des moyens de mesure de la température 431554 de l'eau de rinçage contenue dans le dernier bac d'écoulement 1551 rencontré dans le sens de défilement 3 de la bande 2.

Les actionneurs 4515151, 4515251, 4515351, 4515361, 4515461, 4515341, 4515441, 4515041, 4515042 propres à agir sur les paramètres du rinçage comprennent :
- des pompes 4515151, 4515251, 4515351 de contrôle du débit d'acide provenant desdits dispositifs d'ajout d'acide 1515, 1525, 1535,
- des pompes 4515361, 4515461 de contrôle du débit de produit alcalin provenant des dispositifs d'ajout de produit alcalin 1536, 1546,
- des pompes 4515341, 4515441 de contrôle du débit d'eau déminéralisée provenant des dispositifs annexes d'appoint en eau déminéralisée 1534, 1544,
- une pompe 4515041 de contrôle du débit d'eau déminéralisée provenant du dispositif principal d'appoint en eau déminéralisée 1504,
- un échangeur de chaleur 4515042 pour contrôler la température de l'eau déminéralisée provenant du dispositif principal d'appoint en eau déminéralisée 1504.

L'installation 1 selon l'invention comporte en outre, à la sortie du rinçage et du séchage un système d'inspection 5 de la bande 2 se décomposant comme suit :
- un système d'inspection de l'aspect de surface 51, et
- un système de mesure de l'état de surface 52.

Le système d'inspection de l'aspect de surface 5 de la bande 2 comprend avantageusement :
- un dispositif d'éclairage 511 de la bande 2 en défilement, qui est couplé avec
- un dispositif d'acquisition d'image 512,
- une fonction de traitement d'images 513
- une fonction 514 de détection des contours ou de seuils de gris,
- une fonction 515 d'extraction et de caractérisation morphologique et photométrique des zones suspectes, et
- une fonction 516 de classification et d'identification des zones suspectes par rapport à une bibliothèque d'images, cette fonction 516 permettant de discriminer les défauts de type « sous-décapage » ou de type « sur-décapage », ou encore des défauts intrinsèques à la bande d'acier 2, et enfin de détecter l'absence de défauts.

Le système de mesure d'état de surface 52 comprend avantageusement :
- un dispositif optique 521 pour examiner en continu au moins une ligne de la bande 2 en défilement,
- une fonction de traitement de signal 522, et
- une fonction de classification 523 par apprentissage par rapport à une base de données, des zones suspectes, cette fonction 523 permettant de discriminer des défauts et l'absence de défauts.

Le système de mesure d'état de surface 52 permet d'examiner en continu au moins une ligne située au milieu de la largeur de la bande 2 en défilement, et préférentiellement, trois lignes situées pour l'arc au milieu de la largeur de la bande et, pour les deux centres, dans une zone située entre le tiers et le quart de la largeur de la bande à partir de chaque rive (ou bord de la bande).

L'ensemble des moyens de mesure 43 de l'installation 1 et l'ensemble des actionneurs 45 de l'illustration 1 est contrôlé par un système centralisé de commande 4, qui permet un contrôle du décapage par un processus global qui comprend :
o la mesure 43101, 43102 en continu d'au moins une partie des paramètres de réglage du décapage, ladite mesure étant mise en oeuvre pendant le décapage ;
∘ le calcul 43200 en continu d'au moins une partie des paramètres de réglage du décapage, ledit calcul étant mis en oeuvre pendant le décapage ;
∘ une phase préalable de préparation 4101, 4102, qui est mise en oeuvre en amont ou au début du décapage, au cours de laquelle le processus global de contrôle 4000 définit 4101 et envoie 4102 des consignes de préréglage 411 à l'ensemble des actionneurs 45 à l'aide d'un modèle analytique, qui peut être associé au système de commande prédictive
∘ une phase de commande 4201, 4202 qui est mise en oeuvre pendant le décapage, au cours duquel le processus global de contrôle 4000 définit 4201 et envoie 4202 des consignes de commande optimisées à l'ensemble des actionneurs à l'aide d'un système de commande prédictive ; et
∘ l'inspection 5001, 5002 en continu de la surface de la bande 2, qui conduit à définir 5001 et envoyer 5002, en cas de sous-décapage, une consigne d'alarme (500) à la phase de commande 4201, 4202, qui diminue par paliers la vitesse de défilement V de la bande 2 jusqu'à une vitesse de défilement corrigée V_{cor}, la diminution par paliers de la vitesse de défilement V s'effectuant jusqu'à ce que l'état de la bande 2 soit évalué satisfaisant lors de l'inspection 5001, 5002 de la surface de la bande 2.

Le module de préparation 41 réalise la phase de préparation 4101, 4102 du procédé selon l'invention, qui comporte avantageusement les opérations suivantes :
▪ recevoir des données d'état 450 en provenance 4501 des actionneurs 45, des données d'exploitation 413, et des valeurs cibles 412 des paramètres de réglage établies par le modèle analytique pour optimiser le décapage de la bande 2;
▪ établir 4101 des consignes de préréglage 411 de chaque actionneur 45 ;
▪ adresser 4102 à chaque actionneur 45 les consignes de préréglage 421 ;
▪ établir 4103 les données d'entrée 414 pour la phase de commande 4201, 4202 ;
▪ adresser 4104 lesdites données d'entrée 414 à la phase de commande 4401.

Un module de calcul réalise la phase de calcul 43200 des différentes concentrations en acide 4321 et en fer 4322 dans la solution de décapage 1211, 1221, 1231, 1241 circulant dans le dispositif de décapage 12.

Le module de commande 42 réalise la phase de commande 4401, 4402, qui comporte des opérations suivantes ;
▪ recevoir de manière continue et en temps réel des données d'état 450 en provenance 4502 des actionneurs 45, des informations en provenance 4300 des moyens de mesure et de calcul 43, et les données d'entrée 414 pour la phase de commande 4201, 4202 établies lors de la phase de préparation 4101, 4102 ;
▪ établir 4201 des signaux de commande 425 optimisés à chaque actionneur 45 ;
adresser 4202 lesdits signaux de commande 421 aux actionneurs 45.Le système d'inspection de surface 5 réalise la phase d'inspection de surface de la bande 2, à la sortie de l'installation de décapage, par inspection optique 5001 de l'aspect de la surface de la bande 2 d'une part, et par mesure de variations de l'état de surface de la bande 2.

## Revendications

1. Procédé de décapage d'une bande métallique (2) en défilement dans une installation (1) de ligne de décapage, qui comprend successivement une étape de fragmentation des oxydes formés à la surface de ladite bande (2) lors du laminage à chaud, une étape de décapage acide, une étape de rinçage de la bande (2), et une étape de séchage, la bande (2) étant
entraînée avec une vitesse de défilement V dans ladite installation (1) suivant une direction
longitudinale de défilement perpendiculaire à la
largeur de la bande (2), la vitesse V de défilement de la bande (2) étant contrôlée par un ensemble de débobinage (21) et de bobinage (30), et chacune des étapes du décapage étant contrôlée par des
actionneurs (45) pouvant agir sur des paramètres de réglage de la ligne de décapage (1), l'action ou
l'absence d'action d'un actionneur (45) sur un
paramètre donné de réglage donné étant identifiée par une donnée d'état (450),
ledit procédé comprenant un processus global
de contrôle (4000) du décapage, qui met en oeuvre :
∘ la mesure (43101, 43102) en continu d'au moins une partie des paramètres de
réglage du décapage, ladite mesure étant mise en oeuvre pendant le décapage ;
∘ une phase de commande (4201, 4202) qui est mise en oeuvre pendant le décapage, au cours duquel le processus global de contrôle (4000) définit (4201) et envoie (4202) des consignes de commande (425) optimisées à l'ensemble des actionneurs (45) à l'aide d'un système de commande prédictive ; et
o l'inspection (5001, 5002) en continu de la surface de la bande (2) ;
ledit procédé étant **caractérisé en ce que** le processus global de contrôle (4000) comprend:
o une phase préalable de préparation (4101, 4102) qui est mise en oeuvre en amont ou au début du décapage, au cours de laquelle le processus global de contrôle (4000) définit (4101) et envoie (4102) des consignes de préréglage (411) à l'ensemble des actionneurs (45) à l'aide d'un modèle analytique, qui peut être associé au système de commande prédictive ;
o le calcul (43200) en continu d'au moins une partie des paramètres de réglage du décapage, ledit calcul étant mis en oeuvre pendant le décapage ;
et également **caractérisé en ce que** l'inspection (5001, 5002) en continu de la surface de la bande (2) définit (5001) et envoie (5002), en cas de sous-décapage, une consigne d'alarme (500) à la phase de commande (4201, 4202), qui diminue par paliers (5001) la vitesse de défilement V de la bande (2) jusqu'à une vitesse de défilement corrigée (Vcor), la diminution par paliers de la vitesse de défilement V s'effectuant jusqu'à ce que ce défaut ne soit plus détecté et ne déclenche plus de consigne d'alarme (500),
**caractérisé en ce que** l'inspection (5001, 5002) en continu de la surface de la bande (2) conduit également en cas de détection de défaut de rinçage, à une modification par paliers du pH de l'eau de rinçage, jusqu'à ce que ce défaut ne soit plus détecté.

2. Procédé selon la revendication 1, **caractérisé en ce que** ledit modèle prédictif du processus global de contrôle (4000) corrige les consignes de commande (425) adressées à l'ensemble des actionneurs (4S) autres que la vitesse de défilement V de la bande (2), en fonction de la correction effectuée sur la vitesse de défilement Vecrr et de manière à maintenir satisfaisante l'évaluation faite lors de l'inspection (5001, 5002) de la surface de la bande (2).

3. Procédé selon l'une quelconque des revendications précédentes, **caractérisé en ce que** l'inspection (5001, 5002) de la bande (2) comprend:
∘ l'inspection optique (5001) et
de l'aspect de la surface de la bande (2)
∘ la mesure de variation d'au moins une caractéristique de l'état de surface (5002) de la bande (2).

4. Procédé selon l'une quelconque des revendications précédentes, **caractérisé en ce que** l'inspection optique (5001) de l'aspect de la surface de la bande (2) et la mesure de variation de l'état de surface (5002) de la bande (2) comprennent l'apprentissage des zones suspectes par rapport à une bibliothèque d'images et/ou de données permettant de discriminer les défauts de sur-décapage, ou de sous-décapage, ou encore l'absence de défauts.

5. Procédé selon l'une quelconque des revendications précédentes, **caractérisé en ce que** le calcul (43200) définit les concentrations en acide et fer dans la solution de décapage (1211,
1221, 1241) mise en oeuvre lors du décapage acide.

6. Procédé selon l'une quelconque des revendications précédentes, **caractérisé en ce que** la phase de préparation (4101, 4102) comprend les opérations suivantes
• recevoir des données d'état (450) en provenance (4501) des actionneurs (45),
des données d'exploitation (413), et des valeurs cibles (412) des paramètres de réglage établies par le modèle analytique pour optimiser le décapage de la bande (2)
• Etablir (4101) des consignes de préréglage (411) de chaque actionneur (45)
• adresser (4102) à chaque actionneur (45) lesdites consignes de préréglage (421)
• établir (4103) les données d'entrée (414) pour la phase de commande (4201, 4202)
• adresser (4104) lesdites données d'entrée (414) à la phase de commande (4401).

7. Procédé selon la revendication 6,
**caractérisé en ce que** le modèle analytique comprend un sous-modèle analytique associé à chaque actionneur (45) pour définir ladite consigne de préréglage (411) du paramètre de réglage sur lequel agit l'actionneur (45) associé.

8. Procédé selon l'une quelconque des revendications précédentes, **caractérisé en ce que** la phase de commande (4201, 4202) comprend les opérations suivantes
• recevoir de manière continue et en temps réel des données d'état (450) en provenance (4502) des actionneurs (45), des informations en provenance (4300) des moyens de mesure et de calcul (43), et les données d'entrée (414) pour la phase de commande (4201, 4202) établies lors de la phase de préparation (4101, 4102);
• établir (4201) des signaux de commande (425) optimisés à chaque actionneur (45)
• adresser (4202) lesdits signaux de commande (421) aux actionneurs (45).

9. Procédé selon la revendication 8,
**caractérisé en ce que** le système de commande prédictive comprend une boucle primaire de régulation permettant d'assurer le fonctionnement optimisé de chaque actionneur (45) sur la consigne de commande (425) qui lui est adressée.

10. Installation (1) de ligne continue de décapage d'une bande métallique (2) laminée à chaud et en défilement continu dans ladite installation (1), ladite installation (1) comprenant :
∘ un dispositif de fragmentation (11) des oxydes formés à la surface de la bande (2), ledit dispositif de fragmentation des oxydes (11) étant réglable par l'intermédiaire de paramètres de réglage de la fragmentation (1111, 1112, 1113),
∘ un dispositif de décapage (12), qui est réglable par l'intermédiaire de paramètres de réglage du décapage, et
∘ un dispositif de rinçage (15), qui est réglable par l'intermédiaire de paramètres de réglage du rinçage,
∘ un ensemble de moyens de mesure et de calcul (43) des paramètres de réglage de ladite installation (1),
∘ un ensemble d'actionneurs (45), destinés à agir sur les paramètres de réglage de ladite installation (1),
ladite installation étant **caractérisée en ce qu'**elle comporte en outre
∘ un système centralisé de commande (4) pour optimiser le décapage de la bande métallique (2), ledit système de commande (4) comprenant :
• un module de préparation (41) destiné à recevoir (4100) des informations provenant de l'ensemble des moyens de mesure et de calcul (43) et des actionneurs (45), et à définir (4101) et envoyer (4102) des consignes de préréglage (411) à l'ensemble des actionneurs (45),
• un module de commande (42) destiné à recevoir (4200) des informations provenant de l'ensemble des moyens de mesure et de calcul (43) et des actionneurs (45), et à définir (4201) et envoyer (4202) des consignes optimisées de commande (421) à l'ensemble des actionneurs (45), et
∘ un système d'inspection (5, 51, 52) de la bande (2) disposé à la sortie du dispositif de rinçage (15), ledit système d'inspection (5) étant apte à définir (5001) et envoyer (5002) une consigne d'alarme (500) au module de commande (42) pour agir sur la vitesse de défilement V de la bande (2),
**caractérisée en ce que**
ledit système d'inspection
(5, 51, 52) est également apte à définir (5001) et
envoyer (5002) une consigne de commande (500) au
module de commande (42) pour agir sur des paramètres
de réglage du rinçage, **en ce que** en cas de détection de défaut de rinçage, à
une modification par paliers du pH de l'eau de
rinçage, jusqu'à ce que ce défaut ne soit plus
détecté.

11. Installation (1) selon la revendication 10,
**caractérisée en ce que** l'ensemble des moyens de mesure et de calcul (43) comporte :
- un ensemble de moyens de mesure (431) comprenant des moyens de mesure (4312) de la vitesse de défilement V de la bande (2), des moyens de mesure des paramètres de réglage de la fragmentation des oxydes (431111, 431112, 431113), des moyens de mesure d'au moins une partie des paramètres de réglage du décapage (431212, 431222, 431232, 431242, 431313, 431323 431333, 431343, 431314, 431324, 431334, 341344), et des moyens de mesure des paramètres de réglage du rinçage (431512, 431522, 431532, 431542, 431553, 431554)), et
- des moyens de calcul (432) d'au moins une partie des paramètres de réglage du décapage.

12. Installation (1) selon l'une quelconque des revendications 10 à 11, **caractérisée en ce que** l'ensemble des actionneurs (45) comprennent des actionneurs de la fragmentation (451111, 451112, 10 451113) destinés à agir sur les paramètres de réglage de la fragmentation des oxydes (1111, 1112, 1113),
des actionneurs du décapage (451311, 451311 a, 451311 b 451321, 451321a, 451321b, 451331, 451331a, 451331b, 451341, 451341 a, 451341 b) destinés à agir sur les 15 paramètres de réglage du décapage, et des actionneurs de rinçage (4515151, 4515251, 4515351, 4515361, 4515461, 4515341, 4515441, 4515041, 4515042) destinés à agir sur les paramètres de réglage du rinçage.

13. Installation (1) selon l'une quelconque des revendications 10 à 12, **caractérisée en ce que** les moyens de calcul sont aptes à déterminer les concentrations en acide et en ions ferreux dans la solution de décapage (1211, 1221, 1241) mise en oeuvre dans le dispositif de décapage (12).

14. Installation (1) selon l'une quelconque des revendications 10 à 13, **caractérisée en ce que** :
- l'unité de rinçage (15) comporte une pluralité de rampes de pulvérisation (151, 152, 153, 154, 155) alimentées en eau déminéralisée pour le rinçage et disposées de manière à pouvoir asperger d'eau la bande (2), et une pluralité de bacs d'écoulement (1511, 1521, 1531, 1541, 1551), qui sont chacun disposés sous lesdites rampes de pulvérisation (151, 152, 153, 154, 155), et
- les moyens de mesure des paramètres de réglage du rinçage (431512, 431522, 431532, 431542, 431553, 431554)) comprennent des moyens de mesure du pH (431512, 431522, 431532, 431542, 431552) de l'eau de rinçage dans les bacs d'écoulement (1511, 1521, 1531, 1541, 1551) de l'unité de rinçage (15), des moyens de mesure de la conductivité (431553) et des moyens de mesure de la température (431554) de l'eau de rinçage contenue dans le dernier bac d'écoulement (1551) rencontré dans le sens de défilement (3) de la bande (2).

15. Installation (1) selon la revendication 14, **caractérisée en ce que** :
- l'unité de rinçage (15) comporte un dispositif principal d'appoint en eau déminéralisée (1504) pour alimenter les rampes de pulvérisation (151, 152, 153, 154, 155) de l'unité de rinçage (15), des dispositifs annexes d'appoint en eau déminéralisée (1534, 1544) pour alimenter les troisième (153) et quatrième (154) rampes de pulvérisation rencontrées dans le sens de défilement (3) de la bande (2), des dispositifs d'ajout d'acide (1515, 1525, 1535) dans les premiers bacs d'écoulement (1511, 1521, 1531) de l'unité de rinçage (15) rencontrés dans le sens du défilement (3) de la bande (2), et des dispositifs d'ajout d'un produit alcalin (1536, 1546) dans les troisième (1531) et quatrième (1541) bacs d'écoulement de l'unité de rinçage (15) rencontrés dans le sens du défilement (3) de la bande (2), et
- les actionneurs (4515151, 4515251, 4 515351, 4515361,4515461,4515341,4515441,4515041, 4515042)) propres à agir sur les paramètres du rinçage comprennent une pompe (4515041) de contrôle du débit d'eau déminéralisée provenant du dispositif principal d'appoint en eau déminéralisée (1504), un échangeur de chaleur (4515042) pour contrôler la température de l'eau déminéralisée provenant du dispositif principal d'appoint en eau déminéralisée (1504), et des pompes (4515341, 4515441) de contrôle du débit d'eau déminéralisée provenant des dispositifs annexes d'appoint en eau déminéralisée (1534, 1544), des pompes (4515151, 4515251, 4515351) de contrôle du débit d'acide provenant desdits dispositifs d'ajout d'acide (1515, 1525, 1535), et des pompes (4515361, 4515461) de contrôle du débit de produit alcalin provenant des dispositifs d'ajout de produit alcalin (1536, 1546).

16. Installation (1) selon l'une quelconque des revendications 10 à 15, **caractérisée en ce que** le système d'inspection de surface (5) de la bande (2) comprend :
• un système d'inspection de l'aspect de la surface (51) de la bande (2), et
• un système de mesure de l'état de surface (52) de la bande (2).

17. Installation (1) selon l'une quelconque des revendications 10 à 16, **caractérisée en ce qu'**en cas de sous-décapage, l'un seulement du système d'inspection de l'aspect de la surface (51) et du système de mesure de l'état de surface (52) détecte un défaut et envoie (5002) une consigne d'alarme (500) au module de commande (42) qui l'envoie à un opérateur, qui n'agit sur la vitesse de défilement V de la bande (2)que lorsque l'autre du système de mesure de l'état de surface (52) et du système d'inspection de l'aspect de la surface (51) détecte également ledit défaut.

18. Installation selon la revendication 16 ou 17, **caractérisée en ce que** le système d'inspection de l'aspect de la surface (51) comprend:
• un dispositif d'éclairage (511) de la bande (2) en défilement, qui est couplé avec
• un dispositif (512) d'acquisition d'image
• une fonction de traitement d'images (513),
• une fonction (514) de détection des contours ou des seuils de gris,
• une fonction (515) d'extraction et de caractérisation morphologique et photométrique des zones suspectes, et
• une fonction (516) de classification et d'identification des zones suspectes.

19. Installation (1) selon la revendication 16 ou 17, **caractérisée en ce que** le système de mesure de l'état de surface (52) est apte à mesurer les variations d'au moins une caractéristique de l'état de surface de la bande (2).

20. Installation (1) selon la revendication 19, **caractérisée en ce que** le système de mesure de l'état de surface (52) comprend
• au moins un dispositif optique (521) pour examiner en continu au moins une ligne de la bande (2),
• une fonction de traitement de signal (522), et
• une fonction de classification des zones suspectes (523).

21. Installation (1) selon la revendication 20, **caractérisée en ce que** le dispositif optique (521) est choisi parmi les dispositifs scanners à laser ou laser à dispersion ou optique à aberration chromatique axiale.

22. Installation (1) selon la revendication 19 ou 20, caractérisée le système de mesure de l'état de surface (52) comprend deux dispositifs optiques (521), qui sont situés au-dessus de la bande en défilement, à une distance de ses bords (ou rives) comprise entre un quart et un tiers de la largeur de la bande.

23. Installation (1) selon la revendication 19 ou 20, caractérisée le système de mesure de l'état de surface (52) comprend deux dispositifs optiques (521), qui sont fixés au-dessus de la bande décapée à une distance de ses bords comprise entre un quart et un tiers de sa largeur et sont associés à un autre dispositif de même type, qui est lui fixé au-dessus du centre de la bande.

24. Installation (1) selon l'une quelconque des revendications 10 à 23, **caractérisée en ce que** le système de contrôle (4) de l'installation (1) est apte à envoyer des données à un système de contrôle général contrôlant la gestion des installations de transformation de la bande (2) en aval et/ou en amont de ladite installation (1) de décapage.

## Patentansprüche

1. Verfahren zum Beizen eines metallischen Bandes (2), während es sich durch eine Beizlinienanlage (1) bewegt, das nacheinander einen Schritt des Fragmentierens von Oxiden, die auf der Oberfläche des Bandes (2) während des Heißlaminierens gebildet werden, einen Schritt des Beizens mit Säure, einen Schritt des Spülens des Bandes (2) und einen Trocknungsschritt umfasst, wobei das Band (2) mit einer Bewegungsgeschwindigkeit (V) in der Anlage (1) in einer Bewegungslängsrichtung senkrecht zu der Breite des Bandes (2) angetrieben wird, wobei die Bewegungsgeschwindigkeit des Bandes (2) durch eine Abwicklungsanordnung (21) und Aufwicklungsanordnung (30) gesteuert wird und wobei jeder der Beizschritte durch Aktoren (45) gesteuert wird, die auf Steuerparameter der Beizlinie (1) einwirken können, wobei die Einwirkung oder die fehlende Einwirkung eines Aktors (45) auf einen gegebenen Steuerparameter durch Zustandsdaten (450) identifiziert wird,
wobei das Verfahren einen globalen Steuerprozess (4000) des Beizens umfasst, der Folgendes ausführt:
• ununterbrochenes Messen (43101, 43102) wenigstens eines Teils der Steuerparameter des Beizens, wobei das Messen während des Beizens ausgeführt wird;
• eine Steuerphase (4201, 4202), die während des Beizens ausgeführt wird und während derer der globale Steuerprozess (4000) optimierte Steuersollwerte (425) definiert (4201) und an die Gesamtheit von Aktoren (45) mit Hilfe eines prädiktiven Steuersystems sendet (4202); und
• ununterbrochenes Untersuchen (5001, 5002) der Oberfläche des Bandes (2);
wobei das Verfahren **dadurch gekennzeichnet ist, dass** der globale Steuerprozess (4000) Folgendes umfasst:
• eine vorhergehende Vorbereitungsphase (4101, 4102), die dem Beizen vorgeschaltet oder am Beginn des Beizens ausgeführt wird und während derer der globale Steuerprozess (4000) Vorsteuerungssollwerte (411) mit Hilfe eines analytischen Modells, das dem prädiktiven Steuersystem zugeordnet sein kann, definiert (4101) und an die Anordnung von Aktoren (45) schickt (4102);
• ununterbrochenes Berechnen (43200) wenigstens eines Teils der Steuerparameter des Beizens, wobei das Berechnen während des Beizens ausgeführt wird;
und außerdem **dadurch gekennzeichnet, dass** die ununterbrochene Untersuchung (5001, 5002) der Oberfläche des Bandes (2) im Fall einer Unterbeizung einen Alarmsollwert (500) definiert (5001) und an die Steuerphase (4201, 4202) schickt (5002), die die Bewegungsgeschwindigkeit V des Bandes (2) stufenartig (5001) bis auf eine korrigierte Bewegungsgeschwindigkeit (Vcor) verringert, wobei die stufenartige Verringerung der Bewegungsgeschwindigkeit V erfolgt, bis dieser Fehler nicht mehr detektiert wird und keinen Alarmsollwert (500) mehr auslöst,
**dadurch gekennzeichnet, dass** das ununterbrochene Untersuchen (5001, 5002) der Oberfläche des Bandes (2) auch im Fall der Detektion eines Spülfehlers zu einer stufenweisen Modifikation des pH-Werts des Spülwassers führt, bis dieser Fehler nicht mehr detektiert wird.

2. Verfahren nach Anspruch 1, **dadurch gekennzeichnet, dass** das prädiktive Modell des globalen Steuerprozesses (4000) die Steuersollwerte (425), die an die Anordnung von Aktoren (45) gerichtet sind, mit Ausnahme der Bewegungsgeschwindigkeit V des Bandes (2) als Funktion jener Korrektur korrigiert, die an der Bewegungsgeschwindigkeit Vecrr und in der Weise vorgenommen wird, dass die bei der Untersuchung (5001, 5002) der Oberfläche des Bandes (2) ausgeführte Bewertung zufriedenstellend bleibt.

3. Verfahren nach einem der vorhergehenden Ansprüche, **dadurch gekennzeichnet, dass** die Untersuchung (5001, 5002) des Bandes (2) Folgendes umfasst:
• optisches Untersuchen (5001) des Aussehens der Oberfläche des Bandes (2),
• Messen der Veränderung wenigstens einer Eigenschaft des Zustands der Oberfläche (5002) des Bandes (2).

4. Verfahren nach einem der vorhergehenden Ansprüche, **dadurch gekennzeichnet, dass** die optische Untersuchung (5001) des Aussehens der Oberfläche des Bandes (2) und das Messen der Veränderung des Oberflächenzustands (5002) des Bandes (2) das Lernen auffälliger Zonen in Bezug auf eine Bild- und/oder Datenbibliothek umfasst, was ermöglicht, Fehler einer Überbeizung oder einer Unterbeizung oder die Abwesenheit von Fehlern zu unterscheiden.

5. Verfahren nach einem der vorhergehenden Ansprüche, **dadurch gekennzeichnet, dass** das Berechnen (43200) die Säure- und Eisenkonzentrationen in der Beizlösung (1211, 1221, 1241), das während der Säurebeizung ausgeführt wird, definiert.

6. Verfahren nach einem der vorhergehenden Ansprüche, **dadurch gekennzeichnet, dass** die Vorbereitungsphase (4101, 4102) die folgenden Vorgänge umfasst:
• Empfangen von Zustandsdaten (450), die von Aktoren (45) stammen (4501), von Aufbereitungsdaten (413) und von Sollwerten (412) der Steuerparameter, die durch das analytische Modell aufgestellt werden, um das Beizen des Bandes (2) zu optimieren,
• Erstellen (4101) von Vorsteuerungssollwerten (411) jedes Aktors (45),
• Schicken (4102) der Vorsteuersollwerte (411) an jeden Aktor (45),
• Erstellen (4103) der Eingangsdaten (414) für die Steuerphase (4201, 4202),
• Schicken (4104) der Eingangsdaten (414) an die Steuerphase (4401.

7. Verfahren nach Anspruch 6,
**dadurch gekennzeichnet, dass** das analytische Modell ein analytisches Untermodell umfasst, das jedem Aktor (45) zugeordnet ist, um den Vorsteuersollwert (411) des Steuerparameters zu definieren, auf den der zugeordnete Aktor (45) einwirkt.

8. Verfahren nach einem der vorhergehenden Ansprüche, **dadurch gekennzeichnet, dass** die Steuerphase (4201, 4202) die folgenden Vorgänge umfasst:
• Empfangen auf ununterbrochene Weise und in Echtzeit von Zustandsdaten (450), die von den Aktoren (45) stammen (4502), von Informationen, die von den Mess- und Rechenmitteln (43) stammen (4300), und von Eingangsdaten (414) für die Steuerphase (4201, 4202), die in der Vorbereitungsphase (4101, 4102) erstellt werden;
• Erstellen (4201) von Steuersignalen (421), die für jeden Aktor (45) optimiert sind;
• Schicken (4202) der Steuersignale (421) an die Aktoren (45).

9. Verfahren nach Anspruch 8, **dadurch gekennzeichnet, dass** das prädiktive Steuersystem eine primäre Regulierungsschleife umfasst, die ermöglicht, die optimierte Funktion jedes Aktors (45) auf den Steuersollwert (425), der an ihn geschickt wird, sicherzustellen.

10. Anlage (1) einer ununterbrochenen Beizlinie für ein Metallband (2), das heiß laminiert wird und sich ununterbrochen durch die Anlage (1) bewegt, wobei die Anlage (1) Folgendes umfasst:
• eine Fragmentierungsvorrichtung (11) für Oxide, die auf der Oberfläche des Bandes (2) gebildet werden, wobei die Vorrichtung (11) zum Fragmentieren von Oxiden über Steuerparameter der Fragmentierung (1111, 1112, 1113) steuerbar ist,
• eine Beizvorrichtung (12), die über Parameter zum Steuern des Beizens steuerbar ist, und
• eine Spülvorrichtung (15), die über Parameter zum Steuern des Spülens einstellbar ist,
• eine Anordnung von Mitteln zum Messen und Berechnen (43) der Steuerparameter der Anlage (1),
• eine Anordnung von Aktoren (45), die dazu bestimmt sind, auf die Steuerparameter der Anlage (1) einzuwirken,
wobei die Anlage **dadurch gekennzeichnet ist, dass** sie außerdem Folgendes umfasst:
• ein zentralisiertes Steuersystem (4), um das Beizen des Metallbandes (2) zu optimieren, wobei das Steuersystem (4) Folgendes umfasst:
• ein Vorbereitungsmodul (41), das dazu bestimmt ist, Informationen, die von der Anordnung von Mess- und Rechenmitteln (43) und von den Aktoren (45) stammen, zu empfangen (4100) und Vorsteuersollwerte (411) zu definieren (4101) und an die Anordnung von Aktoren (45) zu schicken (4102),
• ein Steuermodul (42), das dazu bestimmt ist, Informationen, die von der Anordnung von Mess- und Rechenmitteln (43) und von den Aktoren (45) stammen, zu empfangen (4200) und optimierte Steuersollwerte (421) zu definieren (4201) und an die Anordnung von Aktoren (45) zu schicken (4202), und
• ein System (5, 51, 52) zum Untersuchen des Bandes (2), das am Ausgang der Spülvorrichtung (15) angeordnet ist, wobei das Untersuchungssystem (5) dafür ausgelegt ist, einen Alarmsollwert (500) zu definieren (5001) und an das Steuermodul (42) zu schicken (5002), um auf die Bewegungsgeschwindigkeit V des Bandes (2) einzuwirken,
**dadurch gekennzeichnet, dass**
das Untersuchungssystem (5, 51, 52) außerdem dafür ausgelegt ist, einen Steuersollwert (500) zu definieren (5001) und an das Steuermodul (42) zu schicken (5002), um auf die Spülsteuerparameter einzuwirken, und dass im Fall der Detektion eines Spülfehlers der pH-Wert des Spülwassers schrittweise verändert wird, bis dieser Fehler nicht mehr detektiert wird.

11. Anlage (1) nach Anspruch 10,
**dadurch gekennzeichnet, dass** die Anordnung der Mess- und Rechenmittel (43) Folgendes umfasst:
• eine Anordnung von Messmitteln (431), die Mittel (4312) zum Messen der Bewegungsgeschwindigkeit V des Bandes (2), Mittel (431111, 431112, 431113) zum Messen der Steuerparameter der Fragmentierung von Oxiden, Mittel (431212, 431222, 431232, 431242, 431313, 431323, 431333, 431343, 431314, 431324, 431334, 431344) zum Messen wenigstens eines Teils der Steuerparameter des Beizens und Mittel (431512, 431522, 431532, 431542, 431553, 431554) zum Messen der Steuerparameter des Spülens umfasst, und
• Mittel (432) zum Berechnen wenigstens eines Teils der Steuerparameter des Beizens.

12. Anlage (1) nach einem der Ansprüche 10 bis 11, **dadurch gekennzeichnet, dass** die Anordnung von Aktoren (45) Fragmentierungsaktoren (451111, 451112, 451113), die dazu bestimmt sind, auf die Steuerparameter der Fragmentierung der Oxide (1111, 1112, 1113) einzuwirken, Beizaktoren (451311, 451311a, 451311b, 451321, 451321a, 451321b, 451331, 451331a, 451331b, 451341, 451341a, 451341b), die dazu bestimmt sind, auf die Steuerparameter des Beizens einzuwirken, und Spülaktoren (4515151, 4515251, 4515351, 4515361, 4515461, 4515341, 4515441, 4515041, 4515042), die dazu bestimmt sind, auf die Steuerparameter des Spülens einzuwirken, umfasst.

13. Anlage (1) nach einem der Ansprüche 10 bis 12, **dadurch gekennzeichnet, dass** die Rechenmittel dafür ausgelegt sind, die Säure- und Eisenionen-Konzentrationen in der Beizlösung (1211, 1221, 1241) zu bestimmen, was in der Beizvorrichtung (12) ausgeführt wird.

14. Anlage (1) nach einem der Ansprüche 10 bis 13, **dadurch gekennzeichnet, dass**:
• die Spüleinheit (15) mehrere Zerstäubungsrampen (151, 152, 153, 154, 155), die mit demineralisiertem Wasser für die Spülung versorgt werden und in der Weise angeordnet sind, dass sie das Band (2) mit Wasser benetzen können, und mehrere Ausgießtüllen (1511, 1521, 1531, 1541, 1551), die jeweils unter den Zerstäubungsrampen (151, 152, 153, 154, 155) angeordnet sind, umfasst, und
• die Mittel (431512, 431522, 431532, 431542, 431553, 431554) zum Messen der Steuerparameter des Spülens Mittel (431512, 431522, 431532, 431542, 431552) zum Messen des pH-Wertes des Spülwassers in den Ausgießtüllen (1511, 1521, 1531, 1541, 1551) der Spüleinheit (15), Mittel (431553) zum Messen der spezifischen Leitfähigkeit und Mittel (431554) zum Messen der Temperatur des Spülwassers, das in der Ausgießtülle (1551) enthalten ist, die in Richtung der Bewegung (3) des Bandes (2) angetroffen wird, umfassen.

15. Anlage (1) nach Anspruch 14, **dadurch gekennzeichnet, dass**:
• die Spüleinheit (15) eine Hauptvorrichtung für die Zuführung von demineralisiertem Wasser (1504), um die Zerstäubungsrampen (151, 152, 153, 154, 155) der Spüleinheit (15) zu versorgen, Zusatzvorrichtungen für die Versorgung mit demineralisiertem Wasser (1534, 1544), um die dritte (153) und die vierte (154) Zerstäubungsrampe, die in der Bewegungsrichtung (3) des Bandes (2) angetroffen werden, zu versorgen, Vorrichtungen (1515, 1525, 1535) zum Hinzufügen von Säure in den ersten Ausgießtüllen (1511, 1521, 1531) der Spüleinheit (15), die in der Bewegungsrichtung (3) des Bandes (2) angetroffen werden, und Vorrichtungen (1536, 1546) zum Hinzufügen eines alkalischen Produkts in der dritten (1531) und in der vierten (1541) Ausgießtülle der Spüleinheit (15), die in der Bewegungsrichtung (3) des Bandes (2) angetroffen werden, und
• Aktoren (4515151, 4515251, 4515351, 4515361, 4515461, 4515341, 4515441, 4515041, 4515042), die auf die Spülparameter einwirken können, eine Pumpe (4515041) zum Steuern des Durchflusses von demineralisiertem Wasser, das von der Hauptvorrichtung (1504) für die Versorgung mit demineralisiertem Wasser stammt, einen Wärmetauscher (4515042) zum Steuern der Temperatur des demineralisierten Wassers, das von der Hauptvorrichtung (1504) für die Versorgung mit demineralisiertem Wasser stammt, Pumpen (4515341, 4515441) zum Steuern des Durchflusses von demineralisiertem Wasser, das von den Zusatzvorrichtungen (1534, 1544) für die Versorgung mit demineralisiertem Wasser stammt, Pumpen (4515151, 4515251, 4515351) für die Steuerung des Durchflusses von Säure, die von den Vorrichtungen (1515, 1525, 1535) zum Hinzufügen von Säure stammt, und Pumpen (4515361, 4515461) für die Steuerung des Durchflusses des alkalischen Produkts, das von den Vorrichtungen (1536, 1546) für die Hinzufügung eines alkalischen Produkts stammt, umfassen.

16. Anlage (1) nach einem der Ansprüche 10 bis 15, **dadurch gekennzeichnet, dass** das System zum Untersuchen der Oberfläche (5) des Bandes (2) Folgendes umfasst:
• ein System zum Untersuchen des Aussehens der Oberfläche (51) des Bandes (2) und
• ein System zum Messen des Zustands der Oberfläche (52) des Bandes (2).

17. Anlage (1) nach einem der Ansprüche 10 bis 16, **dadurch gekennzeichnet, dass** im Fall einer Unterbeizung nur entweder das System zum Untersuchen des Aussehens der Oberfläche (51) oder das System zum Messen des Zustands der Oberfläche (52) einen Fehler detektiert und einen Alarmsollwert (500) an das Steuermodul (42) schickt (5002), das ihn zu einer Bedienungsperson schickt, der auf die Bewegungsgeschwindigkeit V des Bandes (2) nur einwirkt, wenn das andere des Systems zum Messen des Zustands der Oberfläche (52) und des Systems zum Untersuchen des Aussehens der Oberfläche (51) ebenfalls den Fehler detektiert.

18. Anlage nach Anspruch 16 oder 17, **dadurch gekennzeichnet, dass** das System zum Untersuchen des Aussehens der Oberfläche (51) Folgendes umfasst:
• eine Vorrichtung (511) zum Beleuchten des sich vorbeibewegenden Bandes (2), die gekoppelt ist mit
• einer Bilderfassungsvorrichtung (512),
• einer Bildbearbeitungsfunktion (513),
• einer Funktion (514) zum Detektieren von Umrissen oder von Graustufen,
• einer Funktion (515) zum Extrahieren und morphologischen und photometrischen Charakterisieren auffälliger Zonen und
• einer Funktion (516) zum Klassifizieren und Identifizieren auffälliger Zonen.

19. Anlage (1) nach Anspruch 16 oder 17, **dadurch gekennzeichnet, dass** das System zum Messen des Zustands der Oberfläche (52) dafür ausgelegt ist, die Veränderungen wenigstens einer Charakteristik des Zustands der Oberfläche des Bandes (2) zu messen.

20. Anlage (1) nach Anspruch 19, **dadurch gekennzeichnet, dass** das System zum Messen des Zustands der Oberfläche (52) Folgendes umfasst:
• wenigstens eine optische Vorrichtung (521), um wenigstens eine Linie des Bandes (2) ununterbrochen zu untersuchen,
• eine Funktion zum Verarbeiten des Signals (522) und
• eine Funktion zum Klassifizieren auffälliger Zonen (523).

21. Anlage (1) nach Anspruch 20, **dadurch gekennzeichnet, dass** die optische Vorrichtung (521) unter Scanner-Vorrichtungen mit Laser oder Laser mit Dispersion oder einer Optik mit axialer chromatischer Abberation gewählt ist.

22. Anlage (1) nach Anspruch 19 oder 20, **dadurch gekennzeichnet, dass** das System zum Messen des Zustands der Oberfläche (52) zwei optische Vorrichtungen (521) umfasst, die sich über dem sich vorbeibewegenden Band in einem Abstand von seinen Rändern (oder Begrenzungen), der zwischen einem Viertel und einem Drittel der Breite des Bandes liegt, befinden.

23. Anlage (1) nach Anspruch 19 oder 20, **dadurch gekennzeichnet, dass** das System zum Messen des Zustands der Oberfläche (52) zwei optische Vorrichtungen (521) umfasst, die über dem gebeizten Band in einem Abstand von seinen Rändern im Bereich von einem Viertel bis einem Drittel seiner Breite befestigt sind und einer anderen Vorrichtung desselben Typs zugeordnet sind, die ihrerseits über der Mitte des Bandes befestigt ist.

24. Anlage (1) nach einem der Ansprüche 10 bis 23, **dadurch gekennzeichnet, dass** das Steuersystem (4) der Anlage (1) dafür ausgelegt ist, an ein allgemeines Steuersystem, das die Steuerung von Anlagen für die Transformation des Bandes (2) stromaufseitig und/oder stromabseitig der Beizanlage (1) steuert, Daten zu schicken.

## Claims

1. Method for pickling a metal strip (2) running through a pickling line apparatus (1), that successively comprises a step of fragmenting the oxides formed at the surface of said strip (2) during the hot rolling, an acid pickling step, a step of rinsing the strip (2), and a drying step, the strip (2) being conveyed with a run speed V through said apparatus (1) along a longitudinal run direction perpendicular to the width of the strip (2), the run speed V of the strip (2) being controlled by an assembly for uncoiling (21) and coiling (30), and each of the steps of the pickling being controlled by actuators (45) that can act on adjustment parameters of the pickling line (1), the action or absence of action of an actuator (45) on a given adjustment parameter being identified by a state datum (450),
said method comprising an overall control process (4000) for the pickling, which carries out:
∘ the continuous measurement (43101, 43102) of at least some of the adjustment parameters of the pickling, said measurement being carried out during the pickling;
∘ a control phase (4201, 4202) which is carried out during the pickling, during which the overall control process (4000) defines (4201) and sends (4202) optimized control setpoints (425) to all of the actuators (45) using a predictive control system; and
∘ the continuous inspection (5001, 5002) of the surface of the strip (2);
said process being **characterized in that** the overall control process (4000) comprises:
∘ a prior preparation phase (4101, 4102) which is carried out upstream or at the start of the pickling, during which the overall control process (4000) defines (4101) and sends (4102) pre-adjustment setpoints (411) to all of the actuators (45) using an analytical model, which may be associated with the predictive control system;
∘ the continuous calculation (43200) of at least some of the adjustment parameters of the pickling, said calculation being carried out during the pickling;
and also **characterized in that** the continuous inspection (5001, 5002) of the surface of the strip (2) defines (5001) and sends (5002), in the event of under-pickling, an alarm setpoint (500) to the control phase (4201, 4202), which reduces the run speed V of the strip (2) in steps (5001) down to a corrected run speed (Vcor), the stepwise reduction of the run speed V being carried out until this defect is no longer detected and no longer triggers an alarm setpoint (500), **characterized in that** the continuous inspection (5001, 5002) of the surface of the strip (2) also results, in the event of detecting a rinsing defect, in a stepwise modification of the pH of the rinsing water, until this defect is no longer detected.

2. Method according to Claim 1, **characterized in that** said predictive model of the overall control process (4000) corrects the control setpoints (425) sent to all of the actuators (45) other than the run speed V of the strip (2), as a function of the correction made to the run speed Vecrr and so as to keep the evaluation made during the inspection (5001, 5002) of the surface of the strip (2) satisfactory.

3. Process according to either one of the preceding claims, **characterized in that** the inspection (5001, 5002) of the strip (2) comprises:
∘ the optical inspection (5001) of the appearance of the surface of the strip (2);
∘ the measurement of variation of at least one characteristic of the surface state (5002) of the strip (2).

4. Method according to any one of the preceding claims, **characterized in that** the optical inspection (5001) of the appearance of the surface of the strip (2) and the measurement of variation of the surface state (5002) of the strip (2) comprise the learning of the suspect zones relative to a library of images and/or of data that make it possible to discriminate over-pickling or under-pickling defects, or else the absence of defects.

5. Method according to any one of the preceding claims, **characterized in that** the calculation (43200) defines the concentrations of acid and iron in the pickling solution (1211, 1221, 1241) used during the acid pickling.

6. Method according to any one of the preceding claims, **characterized in that** the preparation phase (4101, 4102) comprises the following operations:
• receiving state data (450) originating (4501) from the actuators (45), operating data (413), and target values (412) of the adjustment parameters established by the analytical model in order to optimize the pickling of the strip (2);
• establishing (4101) pre-adjustment setpoints (411) of each actuator (45);
• sending (4102) said pre-adjustment setpoints (411) to each actuator (45);
• establishing (4103) the input data (414) for the control phase (4201, 4202);
• sending (4104) said input data (414) to the control phase (4401).

7. Method according to Claim 6, **characterized in that** the analytical model comprises an analytical sub-model associated with each actuator (45) in order to define said pre-adjustment setpoint (411) of the adjustment parameter on which the associated actuator (45) acts.

8. Method according to any one of the preceding claims, **characterized in that** the control phase (4201, 4202) comprises the following operations:
• continuously receiving in real time state data (450) originating (4502) from the actuators (45), information originating (4300) from the measurement and calculation means (43), and input data (414) for the control phase (4201, 4202) established during the preparation phase (4101, 4102);
• establishing (4201) control signals (421) optimized for each actuator (45);
• sending (4202) said control signals (421) to the actuators (45).

9. Method according to Claim 8, **characterized in that** the predictive control system comprises a primary adjustment loop that makes it possible to ensure the optimized operation of each actuator (45) on the control setpoint (425) that is sent thereto.

10. Continuous pickling line apparatus (1) for pickling a hot-rolled metal strip (2) continuously running through said apparatus (1), said apparatus (1) comprising:
∘ a fragmenting device (11) for fragmenting the oxides formed at the surface of the strip (2), said oxide-fragmenting device (11) being adjustable by means of adjustment parameters of the fragmentation (1111, 1112, 1113),
∘ a pickling device (12), which is adjustable by means of adjustment parameters of the pickling, and
∘ a rinsing device (15), which is adjustable by means of adjustment parameters of the rinsing,
∘ a set of measurement and calculation means (43) for the adjustment parameters of said apparatus (1),
∘ a set of actuators (45), intended to act on the adjustment parameters of said apparatus (1),
said apparatus being **characterized in that** it also comprises:
∘ a centralized control system (4) for optimizing the pickling of the metal strip (2), said control system (4) comprising:
• a preparation module (41) intended to receive (4100) information originating from all of the measurement and calculation means (43) and actuators (45), and to define (4101) and send (4102) pre-adjustment setpoints (411) to all of the actuators (45),
• a control module (42) intended to receive (4200) information originating from all of the measurement and calculation means (43) and actuators (45), and to define (4201) and send (4202) optimized control setpoints (421) to all of the actuators (45), and
∘ an inspection system (5, 51, 52) for inspecting the strip (2), which system is positioned at the outlet of the rinsing device (15), said inspection system (5) being capable of defining (5001) and sending (5002) an alarm setpoint (500) to the control module (42) in order to act on the run speed V of the strip (2),
**characterized in that**
said inspection system (5, 51, 52) is also capable of defining (5001) and sending (5002) a control setpoint (500) to the control module (42) in order to act on the adjustment parameters of the rinsing, **in that** in the event of detecting a rinsing defect, in a stepwise modification of the pH of the rinsing water, until this defect is no longer detected.

11. Apparatus (1) according to Claim 10, **characterized in that** all of the measurement and calculation means (43) comprise:
- a set of measurement means (431) comprising means (4312) for measuring the run speed V of the strip (2), means for measuring the adjustment parameters of the fragmentation of the oxides (431111, 431112, 431113), means for measuring at least some of the adjustment parameters of the pickling (431212, 431222, 431232, 431242, 431313, 431323, 431333, 431343, 431314, 431324, 431334, 431344), and means for measuring the adjustment parameters of the rinsing (431512, 431522, 431532, 431542, 431553, 431554), and
- means (432) for calculating at least some of the adjustment parameters of the pickling.

12. Apparatus (1) according to either one of Claims 10 and 11, **characterized in that** all of the actuators (45) comprise actuators of the fragmentation (451111, 451112, 451113) intended to act on the adjustment parameters of the fragmentation of the oxides (1111, 1112, 1113), actuators of the pickling (451311, 451311a, 451311b, 451321, 451321a, 451321b, 451331, 451331a, 451331b, 451341, 451341a, 451341b) intended to act on the adjustment parameters of the pickling, and actuators of the rinsing (4515151, 4515251, 4515351, 4515361, 4515461, 4515341, 4515441, 4515041, 4515042) intended to act on the adjustment parameters of the rinsing.

13. Apparatus (1) according to any one of Claims 10 to 12, **characterized in that** the calculation means are capable of determining the concentrations of acid and of ferrous ions in the pickling solution (1211, 1221, 1241) used in the pickling device (12).

14. Apparatus (1) according to any one of Claims 10 to 13, **characterized in that**:
- the rinsing unit (15) comprises a plurality of spray bars (151, 152, 153, 154, 155) supplied with demineralized water for the rinsing and positioned so as to be able to spray the strip (2) with water, and a plurality of drip trays (1511, 1521, 1531, 1541, 1551), which are each positioned under said spray bars (151, 152, 153, 154, 155), and
- the means for measuring the adjustment parameters of the rinsing (431512, 431522, 431532, 431542, 431553, 431554) comprise means for measuring the pH (431512, 431522, 431532, 431542, 431552) of the rinsing water in the drip trays (1511, 1521, 1531, 1541, 1551) of the rinsing unit (15), means for measuring the conductivity (431553) and means for measuring the temperature (431554) of the rinsing water contained in the last drip tray (1551) encountered in the run direction (3) of the strip (2).

15. Apparatus (1) according to Claim 14, **characterized in that**:
- the rinsing unit (15) comprises a main demineralized water makeup device (1504) for supplying the spray bars (151, 152, 153, 154, 155) of the rinsing unit (15), additional demineralized water makeup devices (1534, 1544) for supplying the third (153) and fourth (154) spray bars encountered in the run direction (3) of the strip (2), devices for adding acid (1515, 1525, 1535) to the first drip trays (1511, 1521, 1531) of the rinsing unit (15) encountered in the run direction (3) of the strip (2), and devices for adding an alkali product (1536, 1546) to the third (1531) and fourth (1541) drip trays of the rinsing unit (15) encountered in the run direction (3) of the strip (2), and
- the actuators (4515151, 4515251, 4515351, 4515361, 4515461, 4515341, 4515441, 4515041, 4515042) suitable for acting on the parameters of the rinsing comprise a pump (4515041) for controlling the flow rate of demineralized water originating from the main demineralized water makeup device (1504), a heat exchanger (4515042) for controlling the temperature of the demineralized water originating from the main demineralized water makeup device (1504), and pumps (4515341, 4515441) for controlling the flow rate of demineralized water originating from the additional demineralized water makeup devices (1534, 1544), pumps (4515151, 4515251, 4515351) for controlling the flow rate of acid originating from said devices for adding acid (1515, 1525, 1535), and pumps (4515361, 4515461) for controlling the flow rate of alkaline product originating from the devices for adding alkaline product (1536, 1546).

16. Apparatus (1) according to any one of Claims 10 to 15, **characterized in that** the system (5) for inspecting the surface of the strip (2) comprises:
• a system for inspecting the appearance of the surface (51) of the strip (2), and
• a system for measuring the surface state (52) of the strip (2).

17. Apparatus (1) according to any one of Claims 10 to 16, **characterized in that** in the event of under-pickling, only one of the system for inspecting the appearance of the surface (51) and the system for measuring the surface state (52) detects a defect and sends (5002) an alarm setpoint (500) to the control module (42) which sends it to an operator, who only acts on the run speed V of the strip (2) when the other of the system for measuring the surface state (52) and the system for inspecting the appearance of the surface (51) also detects said defect.

18. Apparatus (1) according to Claim 16 or 17, **characterized in that** the system for inspecting the appearance of the surface (51) comprises:
• a device (511) for lighting the running strip (2), which is coupled with
• an image acquisition device (512),
• an image processing function (513),
• a function (514) for detecting the grey contours or thresholds,
• a function (515) for morphological and photometric extraction and characterization of the suspect zones, and
• a function (516) for classification and identification of the suspect zones.

19. Apparatus (1) according to Claim 16 or 17, **characterized in that** the system for measuring the surface state (52) is capable of measuring the variations of at least one characteristic of the surface state of the strip (2).

20. Apparatus (1) according to Claim 19, **characterized in that** the system for measuring the surface state (52) comprises:
• at least one optical device (521) for continuously examining at least one line of the strip (2),
• a signal processing function (522), and
• a function for classification of the suspect zones (523).

21. Apparatus (1) according to Claim 20, **characterized in that** the optical device (521) is chosen from laser scanner devices or dispersion laser scanner devices or axial chromatic aberration optical devices.

22. Apparatus (1) according to Claim 19 or 20, **characterized in that** the system for measuring the surface state (52) comprises two optical devices (521), which are located above the running strip, at a distance from its sides (or edges) between a quarter and a third of the width of the strip.

23. Apparatus (1) according to Claim 19 or 20, **characterized in that** the system for measuring the surface state (52) comprises two optical devices (521), which are fastened above the pickled strip at a distance from its sides between a quarter and a third of its width and are associated with another device of the same type, which is fastened thereto above the centre of the strip.

24. Apparatus (1) according to any one of Claims 10 to 23, **characterized in that** the control system (4) of the apparatus (1) is capable of sending data to a general control system that controls the management of the apparatus for transforming the strip (2) downstream and/or upstream of said pickling apparatus (1).
